# EUROPEAN PATENT APPLICATION

(11) **EP 4 510 620 A1**
(43) Date of publication of application: **19.02.2025**
(21) Application number: 24728850.9
(22) Date of filing: 02.05.2024
(51) Int. Cl.: H04R 5/04, H04R 1/10, H04R 3/12

(54) **ELECTRONIC DEVICE FOR PROVIDING AUDIO SERVICE, AND OPERATING METHOD THEREOF**

(30) Priority: 28.06.2023 KR 20230083790; 30.08.2023 KR 20230114639
(71) Applicant: Samsung Electronics Co., Ltd, Suwon-si, Gyeonggi-do 16677 (KR)
(72) Inventor: YOO, Hyungseoung., Yeongtong-gu Suwon-si, Gyeonggi-do 16677 (KR); CHEONG, Gupil., Yeongtong-gu Suwon-si, Gyeonggi-do 16677 (KR); YOON, Heejae., Yeongtong-gu Suwon-si, Gyeonggi-do 16677 (KR); JIN, Juyeon., Yeongtong-gu Suwon-si, Gyeonggi-do 16677 (KR)
(74) Representative: Gulde & Partner
(86) International application number: PCT/KR2024/005948
(87) International publication number: WO 2025/005435

(57) **Abstract**

Disclosed is an electronic device including memory storing instructions, a communication circuit, and at least one processor. The instructions amy cause the electronic device to receive advertising data including information related to a broadcast stream including a first audio channel and a second audio channel, receive first audio data of the first audio channel from a source electronic device based on the information, determine whether to receive second audio data of the second audio channel based on state information about a second electronic device related to the second audio channel, receive second audio data of the second audio channel from the source electronic device through the communication circuit based on determining to receive the second audio data of the second audio channel, and output reproduction audio corresponding to the first audio data and the second audio data.

## Description

### [Technical Field]

Various embodiments relate to an electronic device for providing an audio service and a method for operating the same.

### [Background Art]

Bluetooth communication technology may suggest a short-range wireless communication technology that enables electronic devices to be connected to each other for exchanging data or information. Bluetooth communication technology may have Bluetooth legacy (or classic) communication technology or Bluetooth low energy (BLE) communication technology and have various kinds of topology, such as piconet or scatternet.

Recently in wide use are electronic devices adopting Bluetooth communication technology. For example, a pair of earbuds that may be respectively worn on both ears of the user are widely used as an ear-wearable device. An ear-wearable device may provide various functions. For example, an ear-wearable device may include a microphone to identify the user's voice, thereby transmitting data for the user's voice to an electronic device (e.g., a smartphone). Further, the ear-wearable device may include a speaker to output the audio data received from an electronic device (e.g., a smartphone) through the speaker.

The ear-wearable device may include a primary earbud (e.g., the right earbud) and a secondary earbud (e.g., the left earbud) that may be connected to an electronic device (e.g., a smart phone). The primary earbud may transmit voice data to the electronic device through connection with the electronic device, and the electronic device may transmit audio data (or audio content) to the primary earbud. The primary earbud may receive audio data (or audio content) from the electronic device through wireless communication and may output the audio data through the speaker. The secondary earbud may be synchronized with the primary earbud, outputting the audio data received from the electronic device through the speaker.

The primary earbud and the secondary earbud (hereinafter referred to as 'earbuds') may be connected to each other based on Bluetooth communication to perform the above operations. To that ends, the earbuds may perform inquiry, inquiry scan, page, and page scan based on Bluetooth classic and/or perform BLE advertising and BLE scan based on BLE.

The BLE advertising may mean an operation for periodically broadcasting advertising data through an advertising physical channel, and the BLE scan may mean an operation for monitoring reception of the advertising data.

### [Disclosure of Invention]

### [Solution to Problems]

An electronic device and a method for operating the same according to embodiments of the disclosure may broadcast audio data. Additionally, a non-transitory computer-readable storage medium storing one or more programs with instructions according to embodiments of the disclosure may be used to broadcast audio data.

The electronic device and method for operating the same according to embodiments of the disclosure may enhance the audio quality of an audio service including multiple channels.

In embodiments of the disclosure, in a situation where a second electronic device fails to normally reproduce audio, a first electronic device may receive audio data of an audio channel corresponding to the second electronic device.

A source electronic device according to embodiments of the disclosure may include audio data of multiple channels in one audio data packet and transmit the same in a situation where resources are insufficient.

An electronic device according to an embodiment of the disclosure comprises memory storing instructions, a communication circuit and at least one processor functionally coupled with the memory and the communication circuit. The instructions, when executed by the at least one processor, may cause the electronic device to receive, through the communication circuit, advertising data including information related to a broadcast stream including a first audio channel and a second audio channel. The instructions, when executed by the at least one processor, may cause the electronic device to receive first audio data of the first audio channel from a source electronic device through the communication circuit based on the information. The instructions, when executed by the at least one processor, may cause the electronic device to determine whether to receive second audio data of the second audio channel based on state information about a second electronic device related to the second audio channel. The instructions, when executed by the at least one processor, may cause the electronic device to receive the second audio data of the second audio channel from the source electronic device through the communication circuit based on determining to receive the second audio data of the second audio channel. The instructions, when executed by the at least one processor, may cause the electronic device to output a reproduction audio corresponding to the first audio data and the second audio data.

A method performed by an electronic device according to an embodiment of the disclosure may comprise receiving advertising data including information related to a broadcast stream including a first audio channel and a second audio channel. The method may comprise receiving first audio data of the first audio channel from a source electronic device based on the information. The method may comprise determining whether to receive second audio data of the second audio channel based on state information about a second electronic device related to the second audio channel. The method may comprise receiving the second audio data of the second audio channel from the source electronic device based on determining to receive the second audio data of the second audio channel. The method may comprise outputting a reproduction audio corresponding to the first audio data and the second audio data.

According to an embodiment, in a non-transitory computer-readable storage medium storing one or more programs, the one or more programs may store instructions to, when executed by at least one processor of an electronic device, in particular the aforementioned electronic device, enable the electronic device to receive advertising data including information related to a broadcast stream including a first audio channel and a second audio channel, receive first audio data of the first audio channel from a source electronic device based on the information, determine whether to receive second audio data of the second audio channel based on state information about a second electronic device related to the second audio channel, receive the second audio data of the second audio channel from the source electronic device based on determining to receive the second audio data of the second audio channel, and output reproduction audio corresponding to the first audio data and the second audio data.

### [Brief Description of Drawings]

FIG. 1 is a view illustrating an electronic device in a network environment according to various embodiments;
FIG. 2 is a view illustrating connection between electronic devices based on short-range wireless communication according to an embodiment of the disclosure;
FIG. 3 is a view illustrating a configuration of an electronic device supporting short-range wireless communication according to an embodiment;
FIG. 4 is a sequence diagram illustrating Bluetooth LE (BLE) advertising according to an embodiment of the disclosure;
FIG. 5 is a sequence diagram illustrating a procedure for synchronizing with a broadcast isochronous group (BIG), according to an embodiment of the disclosure;
FIG. 6 is a view illustrating BIG parameters according to an embodiment of the disclosure;
FIG. 7 is a view illustrating a BIG event and a BIS event according to an embodiment of the disclosure;
FIGS. 8, 9, and 10 are views illustrating retransmission of BIS data packets according to embodiments of the disclosure;
FIG. 11 is a view illustrating providing an audio service based on BIS according to an embodiment of the disclosure;
FIG. 12 is a view illustrating a configuration of a source electronic device according to an embodiment of the disclosure;
FIG. 13 is a view illustrating reproduction of a multi-audio channel according to an embodiment of the disclosure;
FIG. 14 is a view illustrating an example situation in which a multi-audio channel is not reproducible according to an embodiment of the disclosure;
FIG. 15 is a flowchart illustrating a procedure for receiving a multi-audio channel according to an embodiment of the disclosure;
FIG. 16 is a flowchart illustrating a procedure for determining to receive a multi-audio channel according to an embodiment of the disclosure;
FIG. 17 is a timing diagram illustrating an operation for receiving advertising data for stereo reproduction according to an embodiment of the disclosure;
FIG. 18 is a timing diagram illustrating an operation for stereo reproduction based on pre-stored advertising data according to an embodiment of the disclosure;
FIG. 19 is a timing diagram illustrating an operation for receiving advertising data for stereo reproduction from an assistant according to an embodiment of the disclosure;
FIG. 20 is a timing diagram illustrating an operation for receiving a stereo reproduction command from an assistant according to an embodiment of the disclosure;
FIG. 21 is a view illustrating a user interface for setting a multi-audio channel according to an embodiment of the disclosure;
FIG. 22 is a view illustrating an audio setting for a multi-audio channel according to an embodiment of the disclosure;
FIG. 23 is a view illustrating an operation for searching for advertising data after receiving an audio reproduction command according to an embodiment of the disclosure;
FIG. 24 is a view illustrating an operation for receiving audio of a multi-audio channel in a packet loss situation according to an embodiment of the disclosure;
FIG. 25 is a view illustrating an operation for receiving audio in a packet loss situation during stereo reproduction according to an embodiment of the disclosure;
FIG. 26 is a view illustrating stereo transmission of a source electronic device according to an embodiment of the disclosure;
FIG. 27 is a view illustrating a header format of an audio data packet for stereo discrimination according to an embodiment of the disclosure;
FIG. 28 is a flowchart illustrating stereo transmission of a source electronic device according to an embodiment of the disclosure;
FIG. 29 is a timing diagram illustrating stereo transmission of a source electronic device according to an embodiment of the disclosure;
FIGS. 30A and 30B are views illustrating examples of an operation for transmitting stereo audio data packets in a situation where transmission resources are insufficient according to an embodiment of the disclosure;
FIG. 31 is a view illustrating an operation for transmitting stereo audio data packets on all occasions in a situation where transmission resources are insufficient according to an embodiment of the disclosure; and
FIG. 32 is a view illustrating an operation for transmitting audio data packets arranged in an interleave manner in a situation where transmission resources are insufficient according to an embodiment of the disclosure.

### [Mode for the Invention]

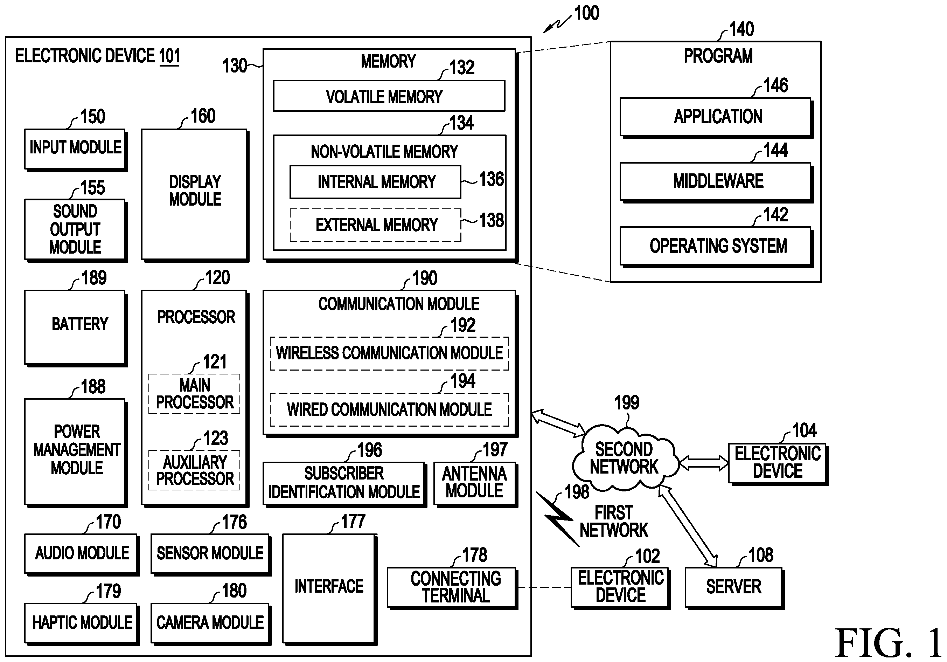

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductive body or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

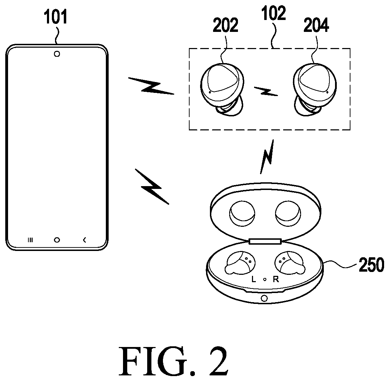

FIG. 2 is a view illustrating connection between electronic devices based on short-range wireless communication according to an embodiment of the disclosure.

Referring to FIG. 2, an electronic device (e.g., the electronic device 101) may be wirelessly connected to an external electronic device 102 (e.g., an ear-wearable device (ear-wearable device)). In an embodiment, the electronic device 101 may be a smartphone, tablet, or laptop computer. In an embodiment, the external electronic device 102 is a true wireless stereo (TWS) device, such as a binaural ear-wearable device, and may include at least one of a first electronic device 202 (e.g., a right earbud) and a second electronic device 204 (e.g., a left earbud).

In an embodiment, the first electronic device 202 and the second electronic device 204 are shown as a pair of earbuds, but the first electronic device 202 and the second electronic device 204 may include not only earbuds but also devices capable of operating in pair. According to an embodiment, the first electronic device 202 and the second electronic device 204 may be implemented to include the same or similar components to each other.

According to an embodiment, the electronic device 101 may establish a connection (e.g., a communication link) with at least one of the first electronic device 202 or the second electronic device 204 and transmit and/or receive data to/from each other. For example, the electronic device 101 may establish a communication link with at least one of the first electronic device 202 and the second electronic device 204 based on short-range wireless communication technology, such as at least one of Wi-Fi or Bluetooth (e.g., Bluetooth classic or Bluetooth low energy (BLE)), or ultra-wideband (UWB). However, the scheme in which the electronic device 101 establishes a communication link with the first electronic device 202 and the second electronic device 204 is not limited to at least one of Wi-Fi, Bluetooth, or UWB.

In an embodiment, the electronic device 101 may establish a communication link with only one of the first electronic device 202 or the second electronic device 204 or establish an individual communication link with each of the first electronic device 202 and the second electronic device 204.

In an embodiment, the electronic device 101 may play a role as central, and the external electronic device 102 (e.g., at least one of the first electronic device 202 or the second electronic device 204) may play a role as peripheral. In an audio service, the electronic device 101 operating as central may be a source electronic device, and the external electronic device 102 (e.g., the first electronic device 202 or the second electronic device 204) operating as peripheral may be a sink electronic device.

In an embodiment, the first electronic device 202 and the second electronic device 204 may establish a communication link therebetween based on at least one of, e.g., Wi-Fi, Bluetooth, or UWB, but the scheme for establishing a communication link by the first electronic device 202 and the second electronic device 204 is not limited to at least one of Wi-Fi, Bluetooth, or UWB.

In an embodiment, either the first electronic device 202 or the second electronic device 204 may operate as a primary device, and the other one may operate as a secondary device. The electronic device (e.g., the first electronic device 202) operating as primary may transmit data (e.g., reception acknowledgment signal or relay data) to the electronic device (e.g., the second electronic device 204) operating as secondary. For example, when the first electronic device 202 and the second electronic device 204 establish a communication link with each other, any one of the first electronic device 202 and the second electronic device 204 may be randomly selected as primary, and the other may be selected as peripheral.

The electronic device 101, the first electronic device 202, and/or the second electronic device 204 may communicate directly or indirectly with the external electronic device 250. In an embodiment, the external electronic device 250 may be an ear buds case device or cradle device for storing and charging the first electronic device 202 and the second electronic device 204.

According to an embodiment, the external electronic device 250 may establish a connection (e.g., a communication link) with at least one of the electronic device 101, the first electronic device 202 or the second electronic device 204 and transmit and/or receive data to/from each other. For example, the external electronic device 250 may establish a communication link with at least one of the electronic device 101, the first electronic device 202, or the second electronic device 204 based on a Wi-Fi scheme, a Bluetooth scheme (e.g., Bluetooth classic or Bluetooth low energy (BLE)) or UWB scheme, but the scheme in which the external electronic device 250 establishes a communication link with the electronic device 101, the first electronic device 202, or the second electronic device 204 is not limited to at least one of the Wi-Fi scheme, the Bluetooth scheme, or the UWB scheme.

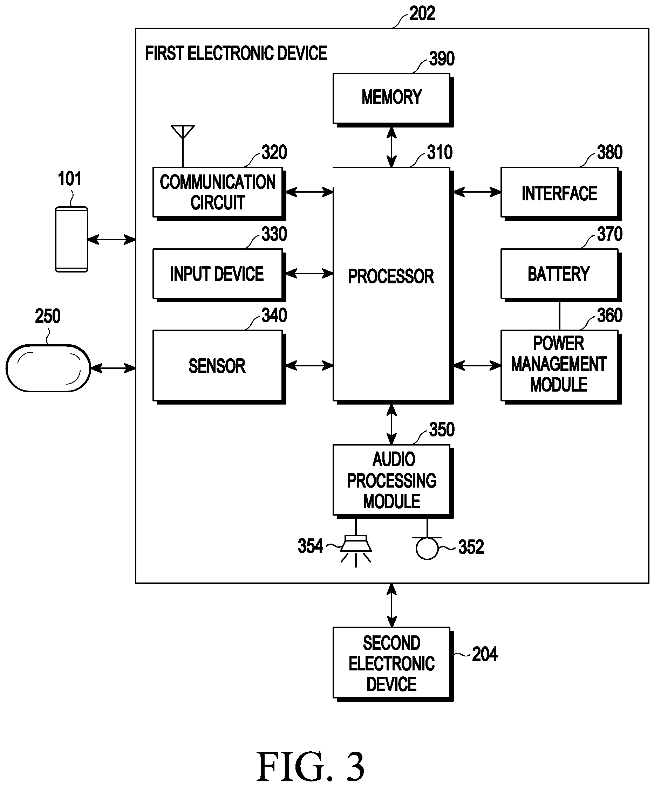

FIG. 3 is a view illustrating a configuration of an electronic device supporting short-range wireless communication according to an embodiment.

Referring to FIG. 3, the electronic device 101 may be wirelessly connected to the electronic devices 202 and 204. The electronic device 101 may be implemented as, e.g., a smart phone but, without limited to those described and/or shown, may be implemented as various types of devices (e.g., notebook computers including standard laptop computers, ultrabooks, or tab books, laptop computers, tablet computers, or desktop computers). The electronic device 101 may be implemented as shown in FIG. 1 and may thus include at least some of the components (e.g., various modules) shown in FIG. 1, and no duplicate description thereof is thus given below.

The electronic devices 202 and 204 may be implemented as wireless earbuds but, without limited to those described and/or shown, may be implemented as various types of devices (e.g., a smart watch, a head-mounted display device, or devices for measuring biometric signals (e.g., heartrate patch)) that supports an audio service as described below. According to an embodiment, when the electronic devices 202 and 204 are wireless earbuds, the first electronic device 202 and the second electronic device 204 may be a pair of devices (e.g., a right earbud and a left earbud). According to an embodiment, the first electronic device 202 and the second electronic device 204 may be implemented to include the same or similar components.

The electronic device 101 may establish a communication connection with at least one of the electronic devices 202 and 204 and transmit and/or receive data to/from each other. For example, each of the electronic devices 202 and 204 may use device-to-device (D2D) communication, such as Wi-Fi direct or Bluetooth, (e.g., using a communication circuit (e.g., the communication circuit 320) supporting the corresponding communication scheme) to establish a communication connection therebetween but, without limited thereto, may communicate with each other using other various types of communication (e.g., at least one of Wi-Fi communication using access points (APs), cellular communication using base stations, or wired communication).

One (e.g., the first electronic device 202) of the first electronic device 202 and the second electronic device 204 may be a primary device (or a master device or a main device), and the other device (e.g., the second electronic device 204) may be a secondary device (or a slave device or a sub device). The primary device (or the main device) may transmit data to the secondary device. For example, when the first electronic device 202 and the second electronic device 204 establish a communication connection with each other, any one of the first electronic device 202 and the second electronic device 204 may be randomly selected as the primary device, and the other may be selected as the secondary device. In an embodiment, when the first electronic device 202 and the second electronic device 204 establish a communication connection therebetween, the device detected as first worn (e.g., when a value indicating wearing is detected by a wearing detection sensor (e.g., a proximity sensor, a touch sensor, a slope 6-axis sensor, or a 9-axis sensor)) may be selected as the primary device, and the other as the secondary device.

The primary device (e.g., the first electronic device 202) may transmit data received from the electronic device 101 to the secondary device (e.g., the second electronic device 204). For example, the first electronic device 202, which is the primary device, may not only output audio to the speaker 354 based on audio data received from the electronic device 101, but also output the audio data to the second electronic device which is the secondary device. In an embodiment, the second electronic device 204 which is the secondary device may receive the audio data, transmitted from the electronic device 101 to the primary device (e.g., the first electronic device 202), based on the connection information provided from the primary device (e.g., the first electronic device 202).

The first electronic device 202 which is the primary device may transmit the data (e.g., audio data or control data) received from the second electronic device 204 which is the secondary device to the electronic device 101. For example, when a touch event occurs in the second electronic device 204 which is the secondary device, control data including information about the event may be transmitted to the electronic device 101 by the first electronic device 202 which is the primary device. However, without limited to those described, the secondary device (e.g., the second electronic device 204) and the electronic device 101 may establish a communication connection therebetween as described above, so that the secondary device and the electronic device 101 may directly perform transmission and/or reception of data therebetween.

The first electronic device 202 may include the same or similar components to at least one of the components (e.g., modules) of the electronic device 101 illustrated in FIG. 1. The first electronic device 202 may include a processor 310 (e.g., the processor 120 of FIG. 1), a communication circuit 320 (e.g., the communication module 190 of FIG. 1), an input device 330 (e.g., the input module 150 of FIG. 1), a sensor 340 (e.g., the sensor module 176 of FIG. 1), an audio processing module 350 (e.g., the audio module 170 of FIG. 1), a microphone 352 (e.g., the input module 150 of FIG. 1), a speaker 354 (e.g., the sound output module 155 of FIG. 1), a power management module 360 (e.g., the power management module 188 of FIG. 1), a battery 370 (e.g., the battery 189 of FIG. 1), an interface 380 (e.g., the interface 177 of FIG. 1), and memory 390 (e.g., the memory 130 of FIG. 1).

The communication circuit 320 may include at least one of a wireless communication module (e.g., a Bluetooth communication module, a cellular communication module, a wireless-fidelity (Wi-Fi) communication module, a near-field communication (NFC) communication module, or a global navigation satellite system (GNSS) communication module) or a wired communication module (e.g., a local area network (LAN) communication module or a power line communication (PLC) communication module). As an example, the Bluetooth communication module may support at least one communication connection (e.g., communication link) by Bluetooth legacy communication (e.g., Bluetooth classic) and/or Bluetooth low energy (BLE) communication.

The communication circuit 320 may directly or indirectly communicate with at least one of the electronic device 101 (e.g., a smartphone), the external electronic device 250 (e.g., a charging device, such as a cradle), or the second electronic device 204 (e.g., the secondary earbud) through a first network (e.g., the first network 198 of FIG. 1), using at least one communication module. The second electronic device 204 may be configured in pair with the first electronic device 202. The communication circuit 320 may include a transmission circuit and a reception circuit configured to support communication with the electronic device 101 and/or the external electronic device 250. The communication module 320 may include one or more communication processors that are operable independently from the processor 310 and support wired or wireless communication.

The communication circuit 320 may be connected with one or more antennas for transmitting signals or information to another electronic device (e.g., the electronic device 101, the second electronic device 204, or the external electronic device 250) or receiving signals or information from the other electronic device. According to an embodiment, at least one antenna appropriate for a communication scheme used in a communication network, such as the first network (e.g., the first network 198 of FIG. 1) or the second network (e.g., the second network 199 of FIG. 2), may be selected from the plurality of antennas by, e.g., the communication circuit 320. The signal or information may then be transmitted or received between the communication circuit 320 and another electronic device via the selected at least one antenna.

The input device 330 may be configured to generate various input signals that may be used for operation of the first electronic device 202. The input device 330 may include at least one of a touch pad, a touch panel, or a button.

The input device 330 may generate a user input regarding the turn-on/off of the first electronic device 202. According to an embodiment, the input device 330 may receive a user input for a communication connection between the first electronic device 202 and the second electronic device 204. According to an embodiment, the input device 330 may receive a user input associated with audio data (or audio content). For example, the user input may be associated with functions of starting playback of audio data, pausing playback, stopping playback, adjusting playback speed, adjusting playback volume, or muting.

The sensor 340 may measure or identify the position or operational state of the first electronic device 202. The sensor 340 may convert measured or identified information into an electric signal. The sensor 340 may include at least one of, e.g., a magnetic sensor, an acceleration sensor, a gyro sensor, a geomagnetic sensor, a proximity sensor, a gesture sensor, a grip sensor, a biometric sensor, or an optical sensor.

The processor 310 may detect data (e.g., audio data) from the data packets (e.g., data protocol data units (PDUs)) received from the electronic device 101 and may process the detected data through the audio processing module 350 and output it to the speaker 354. The audio processing module 350 may support an audio data gathering function and reproduce the gathered audio data.

The audio processing module 350 may include an audio decoder (not shown) and a D/A converter (not shown). The audio decoder may convert audio data stored in the memory 390 or received from the electronic device 101 through the communication circuit 320 into a digital audio signal. The D/A converter may convert the digital audio signal converted by the audio decoder into an analog audio signal. The audio decoder may convert audio data received from the electronic device 101 through the communication circuit 320 and stored in the memory 390 into a digital audio signal. The speaker 354 may output the analog audio signal converted by the D/A converter.

The audio processing module 350 may include an A/D converter (not shown). The A/D converter may convert the analog audio signal transferred through the microphone 352 (hereinafter, referred to as a mic) into a digital voice signal. The mic 352 may include at least one air conduction microphone and/or at least one bone conduction microphone for detecting voice and/or sound.

The audio processing module 350 may play various audio data set in the operation of the first electronic device 202. For example, the processor 310 may be designed to detect insertion or removal of the first electronic device 202 into/from the user's ear through the sensor 340 and reproduce audio data regarding an effect sound or guide sound through the audio processing module 350. The output of the sound effect or guide sound may be omitted according to the user setting or the designer's intention.

The memory 390 may store various data used by at least one component (e.g., the processor 310 or the sensor 340) of the first electronic device 202. The various data may include, for example, software and input data or output data for a command related thereto. The memory 390 may include a volatile memory or a non-volatile memory.

The power management module 360 may manage power supplied to the first electronic device 202. According to an embodiment, the power management module 360 may be implemented as at least part of, for example, a power management integrated circuit (PMIC). According to an embodiment, the power management module 360 may include a battery charging module. According to an embodiment, if another electronic device (e.g., one of the electronic device 101, the second electronic device 204, or another electronic device) is electrically connected with the first electronic device 202 (wirelessly or wiredly), the power management module 360 may receive power from the other electronic device to charge the battery 370.

The battery 370 may supply power to at least one component of the first electronic device 202. The battery 370 may include, e.g., a rechargeable battery. According to an embodiment, if the first electronic device 202 is mounted in the cradle device (e.g., the third electronic device 250), the first electronic device 202 may charge the battery 370 to a designated charging level and then power on the first electronic device 202 or turn on at least a portion of the communication circuit 320.

The interface 380 may support one or more designated protocols that may be used for the first electronic device 202 to directly (e.g., wiredly) connect to the electronic device 101, the second electronic device 204, the external electronic device 250, or another electronic device. The interface 380 may include at least one of, e.g., a high definition multimedia interface (HDMI), a USB interface, an SD card interface, a power line communication (PLC) interface, or an audio interface. According to an embodiment, the interface 380 may include at least one connection port for establishing a physical connection with the cradle device (e.g., the external electronic device 250).

The processor 310 may execute software to control at least one other component (e.g., a hardware or software component) of the first electronic device 202 connected with the processor 310 and may perform various data processing or computations. According to an embodiment, as at least part of the data processing or computation, the processor 310 may load a command or data received from another component (e.g., the sensor 340 or communication circuit 320) onto a volatile memory 390, process the command or the data stored in the volatile memory 390, and store resulting data in a non-volatile memory.

The processor 310 may establish a communication connection with the electronic device 101 through the communication circuit 320 and receive data (e.g., audio data) from the electronic device 101 through the established communication connection. The processor 310 may transmit the data, received from the electronic device 101 through the communication circuit 320, to the second electronic device 204. The processor 310 may perform the operations of the first electronic device 202 which are to be described below. The processor 310 may include a physical layer, a link layer, a host, and an application layer for performing Bluetooth communication.

According to embodiments of the disclosure, the first electronic device 202 may further include various modules depending on the form in which it is provided. There are many variations according to the convergence trend of digital devices, so it is not possible to list them all, but components equivalent to the above-mentioned components may be further included in the first electronic device 202. Further, it is apparent that in the first electronic device 202 according to various embodiments, specific components may be excluded from the above components or replaced with other components according to the form in which it is provided. This will be easily understood by those of ordinary skill in the art.

According to various embodiments, the second electronic device 204 configured in pair with the first electronic device 202 may include the same or similar components as those included in the first electronic device 202 and may perform all or some of the operations of the first electronic device 202 described below in connection with the drawings.

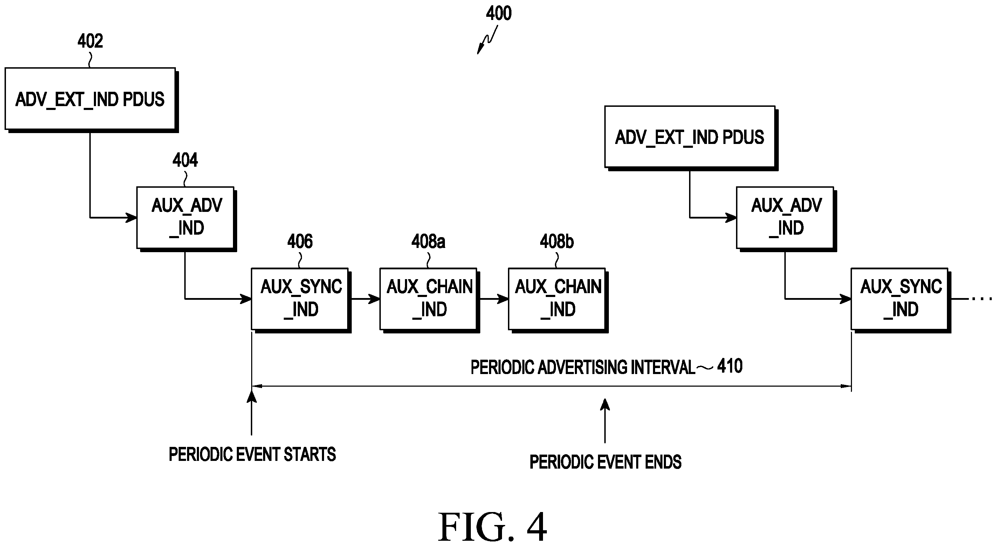

FIG. 4 is a view illustrating Bluetooth LE (BLE) advertising according to an embodiment of the disclosure.

Referring to FIG. 4, the periodic advertising train 400 may be used to transmit extended advertising (EA) data such as the AUX_EXT_IND packet 402 and/or the AUX_ADV_IND packet 404, and periodic advertising (PA) data such as the AUX_SYNC_IND packet 406 and/or at least one AUX_CHAIN_IND packet 408a and 408b.

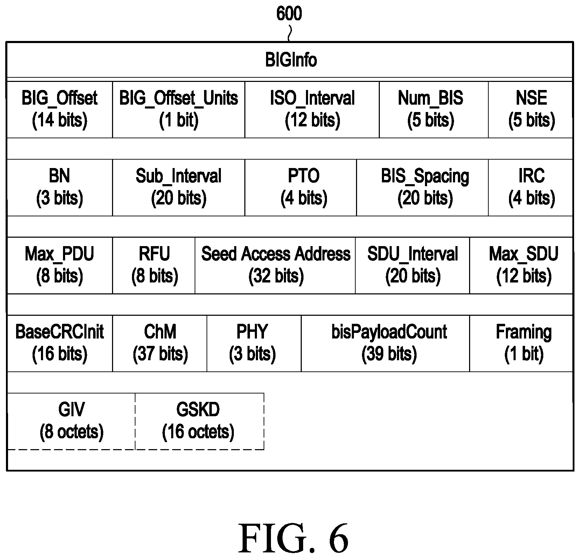

The AUX_EXT_IND packet 402 is transmitted through a common channel and may indicate the transmission position of the AUX_ADV_IND packet 404. The AUX_ADV_IND packet 404 is transmitted according to a specific channel map identified by the AUX_EXT_IND packet 402 and may indicate the position of the AUX_SYNC_IND packet 406, which is the PA. The electronic device (e.g., sink electronic device 505) that has obtained the information about the AUX_ADV_IND packet 404 may receive the AUX_SYNC_IND packet 406. The periodic advertising interval 410 may be initiated by transmission of the AUX_SYNC_IND packet 406. The periodic advertising interval 410 may include an AUX_SYNC_IND packet 406 and at least one AUX_CHAIN_IND 408a and 408b. The AUX_SYNC_IND packet 406 may include audio information (e.g., BIG information 600 of FIG. 6) related to the broadcast audio service.

The BLE communication link may include a plurality of physical channels, e.g., an LE piconet physical channel, an LE advertising physical channel, an advertising periodic physical channel, and an LE isochronous physical channel, which may be optimized and used for their different purposes. The LE piconet physical channel may be used for communication between the connected devices and be connected with a specific piconet. The LE advertising physical channel may be used to broadcast advertising (advertisements) to the Bluetooth device. The advertising may be used to discover user data, connect, or send user data to the counterpart electronic device. The advertising periodical physical channel may be used to transmit user data to the counterpart electronic device at specific intervals through periodic advertising. The LE isochronous physical channel may be used to transfer isochronous data between Bluetooth devices in an LE piconet, or to transfer isochronous data between unconnected Bluetooth devices.

An electronic device (e.g., the electronic device 101, the first electronic device 202, or the second electronic device 204) having a Bluetooth core version of 5.2 or higher may support an audio service through a connected isochronous stream (CIS) scheme and/or a broadcast isochronous stream (BIS) based on Bluetooth communication technology.

CIS may refer to logical transport that allows an electronic device (e.g., the electronic device 101, the first electronic device 202, or the second electronic device 204) to transmit isochronous data in any direction. CIS may carry data (e.g., CIS data packets) of a fixed or variable size, and each CIS link may be associated with an asynchronous connection-less (ACL) link. The CIS link may support transmission of variable-sized packets and one or more packets in each isochronous event, and may support a variety of data rates. Data traffic on the CIS link may be unidirectional or bidirectional, and an acknowledgment protocol may be used to enhance the reliability of data transfer on the CIS link.

BIS may refer to logical transport used to transmit one or more isochronous data streams to all devices (e.g., the electronic device 101, the first electronic device 202, or the second electronic device 204) for BIS within a specified range. The BIS may include one or more subevents for transmitting isochronous data packets (e.g., BIS data packets). The BIS may support transmission of several new isochronous data packets in all BIS events. The BIS does not include an acknowledgment protocol, and may be transmitted unidirectionally from a broadcasting device (e.g., the source electronic device 500) that broadcasts traffic.

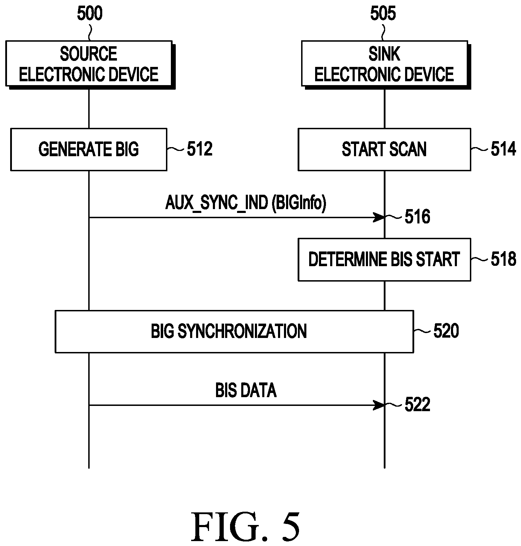

To enhance reliability of BIS logical transmission, isochronous data packets may be unconditionally retransmitted by increasing the number of subevents in all events. Transmission reliability may be enhanced by transmitting the isochronous data packets at an interval preceding an interval related to the isochronous data packets. This is referred to as pre-transmission. The BIS may be identified by a unique access address and timing information. The access address and timing information may be transmitted through advertising data (e.g., the AUX_SYNC_IND packet 406) transmitted using a corresponding periodic advertising broadcast logical transmission. A scanning device (e.g., the sink electronic device 505 of FIG. 5) supporting a synchronized receiver role (e.g., a sink role) may receive isochronous data (e.g., isochronous data packets) from the BIS after synchronizing with the BIS using the timing information obtained from periodic advertising data (e.g., the AUX_SYNC_IND packet 406).

Each BIS may be part of a broadcast isochronous group (BIG). The BIG may include one or more BISs having the same isochronous interval (e.g., ISO_Interval). BISs in the BIG have a common timing reference based on the source electronic device (e.g., the source electronic device 500 of FIG. 5), and may be temporally synchronized with each other. The maximum number of BISs in the BIG may have a designated value (e.g., 31). BIG may also include control subevents.

FIG. 5 is a sequence diagram illustrating a procedure for synchronizing with a broadcast isochronous group (BIG), according to an embodiment of the disclosure.

Referring to FIG. 5, in operation 512, the source electronic device 500 (e.g., the electronic device 101) may generate a BIG including one or more BISs and may generate BIG parameters (e.g., the BIG information 600 of FIG. 6) related to the BIG. In operation 514, for reception synchronization, the sink electronic device 505 (e.g., at least one of the electronic device 101, the first electronic device 202, or the second electronic device 204) may start a BLE scan (e.g., BIS scan).

In operation 516, the source electronic device 500 may perform periodic advertising that broadcasts advertising data related to the BIG periodically at designated intervals. The advertising data may include extended advertising (EA) data such as the AUX_EXT_IND packet 402 and/or the AUX_ADV_IND packet 404, and periodic advertising (PA) data such as the AUX_SYNC_IND packet 406. For example, the AUX_SYNC_IND packet 406 may include BIG parameters (e.g., the BIG information 600 of FIG. 6) in an additional controller advertising data (ACAD) field. The BIG parameters may be used to synchronize with a BIG (e.g., at least one BIS) provided by the source electronic device 500.

In an embodiment, the sink electronic device 505 may receive the advertising data from the source electronic device 500 through the BLE scan of operation 514 or based on the synchronization information provided from the BIS assistant (e.g., the electronic device 101) and may obtain the BIG information (e.g., the BIG information 600) from the advertising data. In an embodiment, the sink electronic device 505 (e.g., the first electronic device 101) may receive synchronization information (e.g., the content of the LL_PERIODIC_SYNC_IND packet) required to receive the BIG information 600 from the source electronic device 500, and may transmit the synchronization information to an external electronic device (e.g., the first electronic device 202 or the second electronic device 204). In an embodiment, the sink electronic device 505 (e.g., the first electronic device 202 or the second electronic device 204) may receive the advertising data from the source electronic device 500 and may obtain BIG information (e.g., the BIG information 600) from the advertising data, based on synchronization information received from an external electronic device (not shown) (e.g., the electronic device 101) playing as a BIS assistant role without performing BLE scan.

In operation 518, the sink electronic device 505 may determine to start receiving at least one BIS based on the BIG information. In an embodiment, the sink electronic device 505 may display information about the source electronic device 500 discovered through operations 514 and 516, and may determine to start receiving the at least one BIS, based on reception of a user input for requesting to receive a broadcast service by the source electronic device 500. In an embodiment, operation 518 may be omitted, and the sink electronic device 505 may proceed to operation 520 after operation 516.

In operation 520, the sink electronic device 505 may synchronize with the BIG (e.g., at least one BIS) of the source electronic device 500 using the BIG parameters included in the BIG information. In an embodiment, the BIG synchronization operation performed by the sink electronic device 505 in operation 520 may include calculating an access address and timing information where the BIS audio data is transmitted, based on the BIG information. In an embodiment, the timing information may indicate transmission times of channel information (e.g., a channel map) and audio data (e.g., BIS data packets).

In operation 522, the sink electronic device 505 may receive audio data (e.g., BIS data packets) broadcast by the source electronic device 500 through at least one BIS in the BIG. In an embodiment, the sink electronic device 505 may receive the audio data using the access address and timing information calculated in operation 520.

FIG. 6 is a view illustrating BIG parameters according to an embodiment of the disclosure.

Referring to FIG. 6, the BIG information 600 may include BIG parameters, such as at least one of BIG_Offset, BIG_Offset_units, ISO_Interval, Num_BIS, number of subevent (NSE), burst number (BN), Sub_Interval, pre-transmission offset (PTO), BIS_Spacing, immediate repetition count (IRC), Max_PDU, reserved for future use (RFU), SeedAccessAddress, SDU_Interval, Max_SDU, BaseCRCInit, channel map (ChM), physical (PHY), bisPayloadCount, Framing, group initialization vector (GIV), or group session key derivation (GSKD). In an embodiment, the length of the BIG information 600 may be 33 octets when not encrypted, and 57 octets when encrypted.

BIG parameters that may be included in the BIG information 600 will be described below.

Num_BIS indicates the number of BISs in the BIG. Each of the BISs in the BIG may be assigned a different BIS_Number from 1 to Num_BIS.

ISO_Interval may indicate a time of 1.25 ms between two adjacent BIG anchor points (e.g. 5ms to 4s).

BIS_Spacing may indicate the time between the start time of the subevents in adjacent BISs in the BIG and the start time of the first subevent of the last BIS.

Sub_Interval may indicate the time between start times of two consecutive subevents of each BIS.

Max_PDU is the maximum number of data octets capable of transmitting each BIS data packet within the BIG and may indicate the maximum duration of the packet (e.g. 1 to 251 octets).

Max_SDU may indicate the maximum size (e.g., maximum duration) of the service data unit (SDU) in the BIG (e.g. 1 to 4095 octets).

BN, PTO, and IRC may include values for controlling which data is transmitted in each BIG event. Subevents of each BIS event may be divided into groups (e.g., subevent groups) including BN subevents. Thus, the group count (GC) is NSE/BN. IRC may designate the number of groups carrying data related to the current BIS event. The remaining groups may carry data related to future BIS events designated by the PTO.

IRC may be greater than 0 and may not be greater than GC. If IRC = GC, the PTO may be ignored, otherwise the PTO may be greater than zero. Groups of subevents may be sequentially numbered (e.g., group index g) from 0 to GC-1. When g < IRC, the group g may include data related to the current BIS event. When g >= IRC, group g may include data related to a future BIS event (e.g., PTO × (g - IRC + 1)-th BIS event) after the current BIS event.

The NSE indicates the maximum number of subevents within each BIG event.

The framing field may indicate whether the BIG transmits framed data or unframed data.

BIG_Offset may indicate the time from the start time of the packet (e.g., AUX_SYNC_IND of operation 516) including the BIG information 600 to the next BIG anchor point. The value of BIG_Offset may be indicated in units indicated by bits of BIG_Offset_Units. The time offset is determined by multiplying the value of BIG_Offset by the unit indicated by BIG_Offset_Units. The time offset may be greater than 600 µs (micro second). When the bit of BIG_Offset_Units is set, the unit is 300 µs, otherwise 30 µs. The bit of BIG_Offset_Units may not be set if the time offset is less than 491,460 µs. The BIG anchor point may be between the time offset and the time offset plus 1 unit after the start time of the packet (e.g., AUX_SYNC_IND) as follows.

The parameters included in the BIG information 600 may not be changed during the lifetime of the BIG.

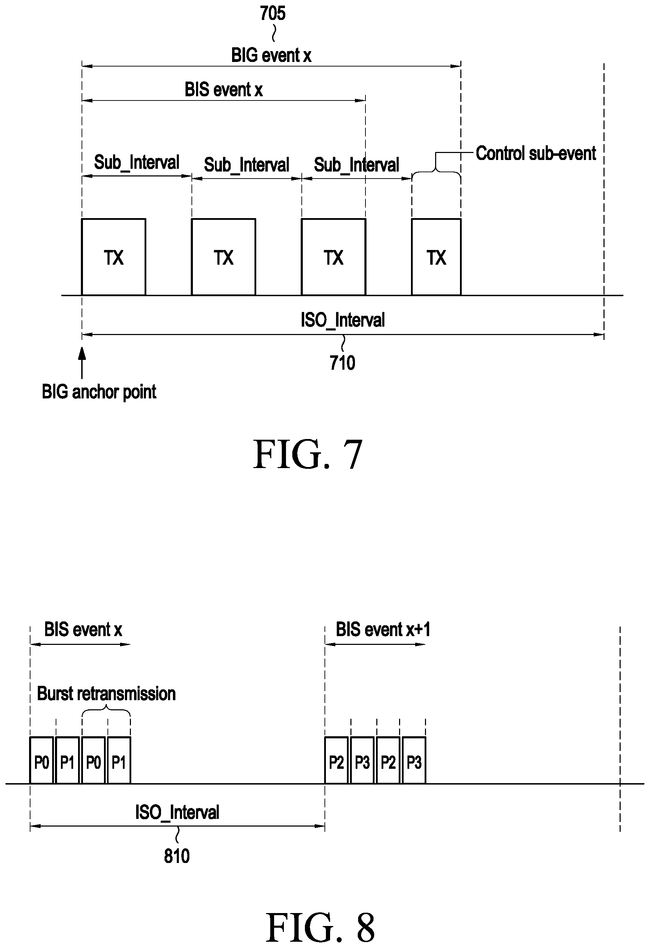

FIG. 7 is a view illustrating a BIG event and a BIS event according to an embodiment of the disclosure.

Referring to FIG. 7, a BIG event (e.g., the BIG event x 705) may include one or more BIS data packets (e.g., PDUs). The source electronic device (e.g., the source electronic device 500) may transmit BIS data packets in BIG events (e.g., BIG event x 705). Each BIG event (e.g., BIG event x 705) may be divided into Num_BIS BIS events and, if present, one control subevent. Each BIS event may be divided into NSE subevents.

Each BIS event may start at the BIS anchor point and end after the last subevent. Each BIG event (e.g., the BIG event x 705) may start at the BIG anchor point and, if there is a control subevent, it may end thereafter, otherwise, it may end at the last constituent BIS event. The BIG anchor points may be regularly spaced apart by an interval of ISO_Interval 710. The BIS anchor points for BIS n of the BIG may be after (n - 1) × BIS_Spacing from the BIG anchor points, and may be regularly spaced apart by ISO_Interval 710. The subevents of each BIS may be spaced apart by Sub_Interval. The source electronic device (e.g., the second electronic device 500) may terminate the current BIG event (e.g., the BIG event x 705), at least T_IFS (time for inter frame space) (e.g., 150 µs) before the BIG anchor point of the next BIG event. The time interval between two consecutive packets on the same channel may be referred to as T_IFS. T_IFS may be defined as the time from the end point of the last bit of the previous packet to the start point of the first bit of the subsequent packet.

BISs in the BIG may be arranged sequentially or interleaved according to Sub_Interval and BIS_Spacing. In the case of sequential arrangement, BIS_Spacing may be greater than or equal to NSE X Sub_Interval, and all subevents of the BIS event may occur together. When interleaved, Sub_Interval may be Num_BIS X BIS_Spacing, the first subevents of all BISs may be adjacent, and the second subevents of all the following BISs may be adjacent.

The maximum length possible for the data portion (except for the control subevent) of the BIG event may be indicated as BIG_Sync_Delay. The value of BIG_Sync_Delay may be the same as the time from the BIS anchor point to the BIG synchronization point, which is the end point of the packet including the payload of the Max_PDU octet transmitted in the last subevent. (BIG_Sync_Delay = (Num_BIS - 1) X BIS_Spacing + (NSE - 1) X Sub_Interval + MPT)

The BIS subevent is an opportunity for the source electronic device 500 to transmit BIS data packets and for the sink electronic device 505 (e.g., the electronic device 101, the first electronic device 202 and/or the second electronic device 204) operating as a sink to receive the BIS data packets. The source electronic device 500 may transmit one BIS data packet at a time point at which each BIS subevent of the BIS event starts, and may transmit, e.g., at least one BIS packet within six consecutive BIS events.

For each BIS event, the source electronic device 500 may provide a data burst including BN payloads. Each payload may include a single fragment or one or more SDU segments. One data burst is related to a designated BIS event, but may be transmitted in earlier events.

FIGS. 8, 9, and 10 are views illustrating retransmission of BIS data packets according to embodiments of the disclosure.

Referring to FIG. 8, payloads may be allocated to BIS sub-events in each BIS event in a BIS having BN=2, IRC=2, PTO=0, and NSE=4. One BIS event corresponding to ISO_Interval 810 may include up to NSE (=4) BIS sub-events. BIS data packets (e.g., P0, P1, or P2, P3) each including two payloads in each BIS event (e.g., BIS event x or BIS event x+1) may be allocated to two preceding BIS sub-events, and the remaining sub-events may be used for retransmission of the same BIS data packets (e.g., P0, P1, or P2, P3).

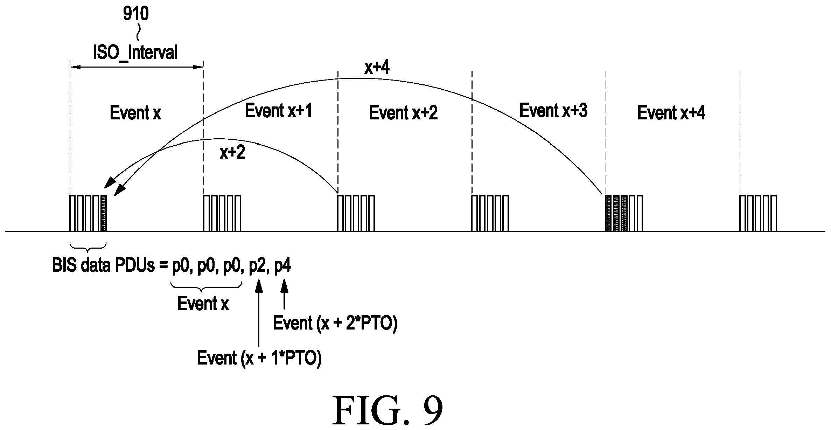

Referring to FIG. 9, payloads may be allocated to BIS sub-events in each BIS event in a BIS having BN=1, IRC=3, PTO=2, and NSE=5. One BIS event corresponding to ISO_Interval 910 may include up to NSE (=5) BIS sub-events. Within the BIS event x, the BIS data packet p0 may be transmitted in three preceding BIS sub-events, the BIS data packet p2 for the BIS event x+2 may be transmitted in the fourth BIS sub-event, and the BIS data packet p4 for the BIS event x+4 may be transmitted in the last BIS sub-event. Accordingly, the BIS data packet p2 may be repeatedly transmitted in the BIS event x and the BIS event x+2, and the BIS data packet p4 may be repeatedly transmitted in the BIS event x and the BIS event x+4.

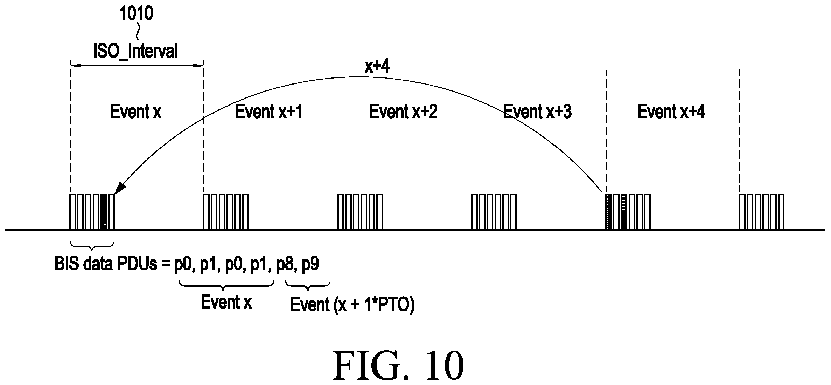

Referring to FIG. 10, payloads may be allocated to BIS sub-events in each BIS event in a BIS having BN=2, IRC=2, PTO=4, and NSE=6. One BIS event corresponding to ISO_Interval 1010 may include up to NSE (=6) BIS sub-events. Within the BIS event x, the BIS data packets p0 and p1 may be transmitted in four previous BIS sub-events, and in the last two BIS sub-events, the BIS data packets p8 and p9 for the BIS event x+4 may be transmitted. Accordingly, the BIS data packets p8 and p9 may be repeatedly transmitted in the BIS event x and the BIS event x+4.

Among various Bluetooth topologies, the first electronic device 202 and the second electronic device 204 included in an ear wearable device (e.g., the electronic device 102) such as TWS may receive audio data of different channels (e.g., a left channel and a right channel) of the same audio service. For example, the second electronic device 204 may receive at least a portion of audio data received by the first electronic device 202 from an external electronic device (e.g., the electronic device 101) from the first electronic device 202. For example, in the BLE audio topology, the first electronic device 202 and the second electronic device 204 may use an audio service from an external electronic device (e.g., the electronic device 101 or the source electronic device 500).

The first electronic device 202 and the second electronic device 204 may communicate with each other for various purposes, such as exchanging states with each other and/or changing operating parameters, and the communication may be referred to as bridge communication. For example, in an ear wearable device such as a TWS, each of the first electronic device 202 corresponding to the left channel and the second electronic device 204 corresponding to the right channel may obtain information about the state (e.g., a communication degradation situation, whether it is worn, whether it is stored in a case, and/or a battery status) of the counterpart electronic device through bridge communication (e.g., communication between TWSs). In an embodiment, the first electronic device 202 and the second electronic device 204 may use a fixedly limited communication time (e.g., communication time between TWSs) on a communication link for bridge communication while using an audio service on a connection basis or non-connection basis with an external electronic device (e.g., the electronic device 101).

A source electronic device (e.g., the source electronic device 500) providing an audio service may transmit audio data to one or more nearby sink electronic devices (e.g., the first electronic device 202 and/or the second electronic device 204) using at least one BIS, and the sink electronic devices may simultaneously output the audio data. The source electronic device 500 may provide an audio service (e.g., a BIS audio service) to nearby sink electronic devices (e.g., the first electronic device 202 and/or the second electronic device 204) using the same parameters (e.g., the BIG information 600 of FIG. 6) and timing.

In audio streaming based on BIS, when a situation occurs in which only one (e.g., the first electronic device 202) of the first electronic device 202 and the second electronic device 204 constituting the ear wearable device (e.g., the electronic device 102) is available, it may be difficult for the user to receive sufficient audio services with only one electronic device (e.g., the first electronic device 202). For example, when the second electronic device 204 is in a state of being unable to perform an audio reproduction operation, such as when it is not worn, stored in a case, or has a low battery level (e.g., when the battery level is less than a designated reference value), disconnected, or powered off, the user may desire to receive an audio service of better quality only with the first electronic device 202.

The BIS audio service may have a time occupancy constraint in consideration of a Wi-Fi coexistence (CoEX) operation or a Bluetooth concurrency (BT_conc) operation to be performed by the source electronic device 500. Accordingly, the BIS audio service maintains a lower packet transmission rate or a lower time occupancy than connection-based CIS communication or Bluetooth legacy communication, and thus it may be difficult to maintain the quality of the BIS audio service in a time period when there is temporary communication deterioration due to a wireless environment or when another communication task (e.g., Bluetooth communication (e.g., Bluetooth synchronization operation) other than the BIS audio service and/or Wi-Fi coexistence (CoEX) operation) of the source electronic device 500 is scheduled.

Embodiments of the disclosure may efficiently receive audio data of multiple channels according to the user's environment and context in the sink electronic device 505 (e.g., the first electronic device 202 and/or the second electronic device 204) receiving an audio service in a broadcast manner, such as BIS. Embodiments of the disclosure may at least temporarily transmit joint stereo-type audio data packets in which audio data of multiple channels are merged when transmission resources are insufficient due to other scheduled communication tasks than the BIS audio service in the source electronic device 500 providing the audio service in a broadcast manner such as BIS.

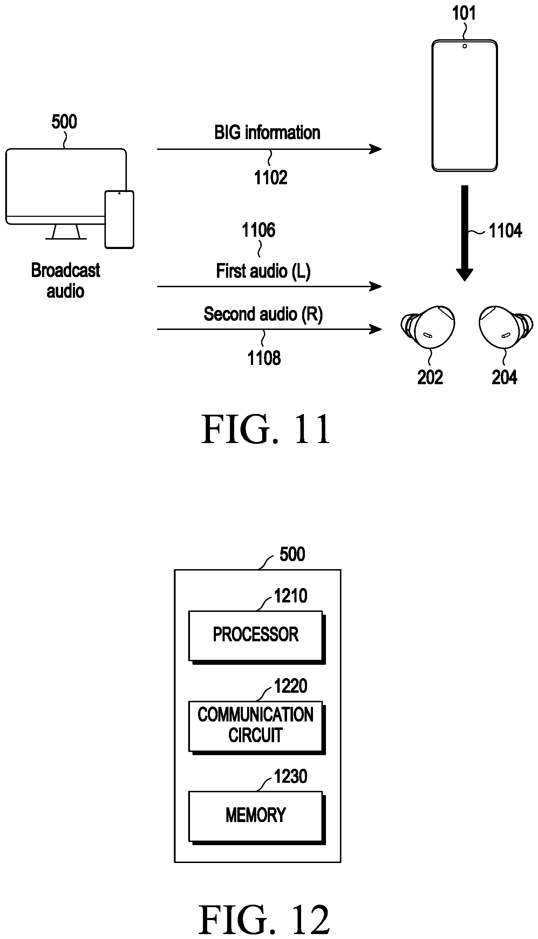

FIG. 11 is a view illustrating providing an audio service based on BIS according to an embodiment of the disclosure.

Referring to FIG. 11, the source electronic device 500 may be configured to provide a BIS-based audio service, such as a TV or a phone. The source electronic device 500 may broadcast (e.g., advertise) the BIG information 1102 (e.g., the BIG information 600 of FIG. 6) related to the broadcast audio stream. In an embodiment, the source electronic device 500 may broadcast extended advertising (EA) data such as the AUX_EXT_IND packet 402 and/or the AUX_ADV_IND packet 404, and periodic advertising (PA) data such as the AUX_SYNC_IND packet 406 and/or at least one AUX_CHAIN_IND packet 408a and 408b. The BIG information 1102 may be included in the AUX_SYNC_IND packet 406.

The sink electronic device (e.g., the first electronic device 202 and/or the second electronic device 204) may receive the BIG information 1102 from the source electronic device 500. In an embodiment, the sink electronic device (e.g., the first electronic device 202 and/or the second electronic device 204) may receive advertising data (e.g., the AUX_SYNC_IND packet 406) including the BIG information 1102 through BLE scan, or may receive the advertising data (e.g., the AUX_SYNC_IND packet 406) including the BIG information 1102 using the synchronization information 1104 provided from the external electronic device (e.g., the electronic device 101) operating as an assistant of the BIS service. Although not illustrated, in an embodiment, the sink electronic device (e.g., the first electronic device 202 and/or the second electronic device 204) may receive the BIG information 1102 from an external electronic device (e.g., the electronic device 101) instead of the source electronic device 500.

A sink electronic device (e.g., the first electronic device 202 and/or the second electronic device 204) may listen to an audio stream (e.g., the first audio L 1106 and/or the second audio R 1108) provided by the source electronic device 500 using the BIG information 1102. In an embodiment, the BIS audio service provided by the source electronic device 500 may include a first channel (e.g., a left audio channel) and a second channel (e.g., a right audio channel), and the BIG information 1102 may include first parameters related to BIS1 corresponding to the first channel and second parameters related to BIS2 corresponding to the second channel. The first electronic device 202 may receive first audio data (e.g., left audio data packets) corresponding to the left audio channel using first parameters of the BIG information 1102. The second electronic device 204 may receive second audio data (e.g., left audio data packets) corresponding to the right audio channel using the second parameters of the BIG information 1102.

In an embodiment, the first electronic device 202 and/or the second electronic device 204 may directly scan advertising data (e.g., the synchronization information 1104 and/or the AUX_SYNC_IND packet 406) from the source electronic device 500 based on a scan command from an external electronic device (e.g., the electronic device 101). In an embodiment, the first electronic device 202 and/or the second electronic device 204 may directly scan advertising data (e.g., the synchronization information 1104 and/or the AUX_SYNC_IND packet 406) from the source electronic device 500 based on power on or separation from the case (e.g., the external electronic device 250) without a scan command from the external electronic device (e.g., the electronic device 101).

FIG. 12 is a view illustrating a configuration of a source electronic device according to an embodiment of the disclosure.

Referring to FIG. 12, a source electronic device 500 may include a processor 1210, a communication circuit 1220, and memory 1230. The source electronic device 500 may support at least one of long term evolution (LTE), Zigbee, Z-Wave, Wi-Fi, Bluetooth low energy (BLE), and/or UWB through the communication circuit 1220. The source electronic device 500 may include a communication circuit 1220 (e.g., the communication module 190 of FIG. 1) that transmits audio data to sink electronic devices (e.g., the first electronic device 202 and/or the second electronic device 204). In an embodiment, one or more antennas (not shown) may be implemented as part of the communication circuit 1220.

The communication circuit 1220 may include one or more communication circuits, and the plurality of communication circuits may include a communication circuit based on LTE, Bluetooth legacy, BLE, UWB, Zigbee, G-wave, and/or Wi-Fi. According to an embodiment, the communication circuit 1220 does not include a separate communication circuit based on each of LTE, Bluetooth legacy, BLE, UWB, Zigbee, G-wave, and/or Wi-Fi, but may include a communication circuit that is based on at least two of LTE, BLE, UWB, Zigbee, G-wave, and/or Wi-Fi, or all of LTE, BLE, UWB, Zigbee, G-wave, and/or Wi-Fi.

The source electronic device 500 may include a processor 1210 (e.g., the processor 120 of FIG. 1) that may be implemented with one or more single-core processors or one or more multi-core processors, and memory 1230 (e.g., the memory 130 of FIG. 1) that stores instructions for operating the source electronic device 500. The memory 1230 may store related data (e.g., audio data) and parameters (e.g., BIG parameters) for providing the BIS audio service.

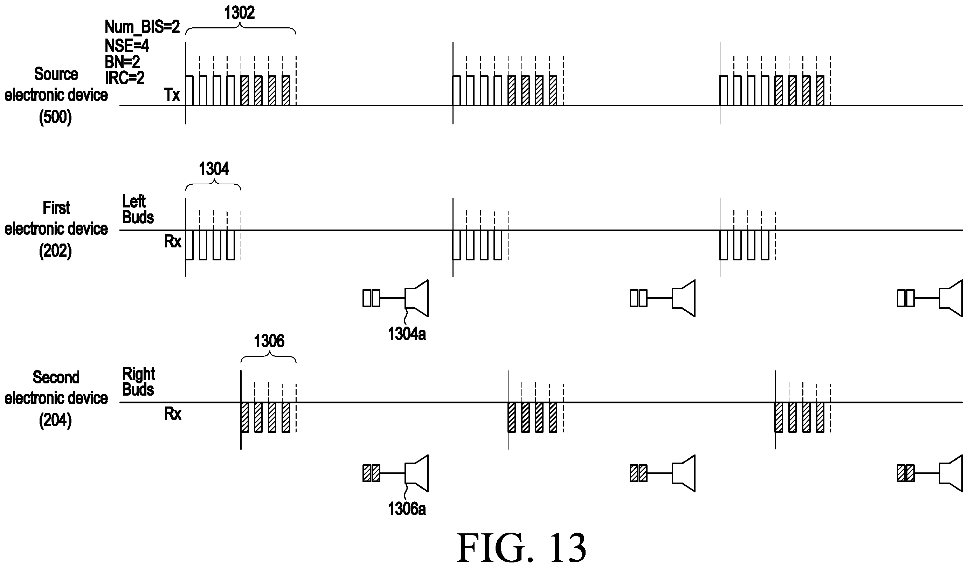

FIG. 13 is a view illustrating reproduction of a multi-audio channel according to an embodiment of the disclosure.

Referring to FIG. 13, the source electronic device 500 may transmit (e.g., broadcast) audio data 1302 for a BIS audio service according to BIG parameters (e.g., Num_BIS=2, NSE=4, BN=2, and IRC=2). As defined by Num_BIS=2, the BIS audio service may include two BISs (e.g., BIS1 and BIS2), where BIS1 may include audio data (e.g., the audio data packets 1304) corresponding to the left audio channel, and BIS2 may include audio data (e.g., the audio data packets 1306) corresponding to the right audio channel. The audio data 1302 transmitted within one interval may include four left audio data packets 1304 and four right audio data packets 1306.

The first electronic device 202 may receive the left audio data packets 1304 based on the BIG parameters and may reproduce the left audio data packets 1304a. The second electronic device 204 may receive the right audio data packets 1306 based on the BIG parameters and may reproduce (1306a) the right audio data packets 1306.

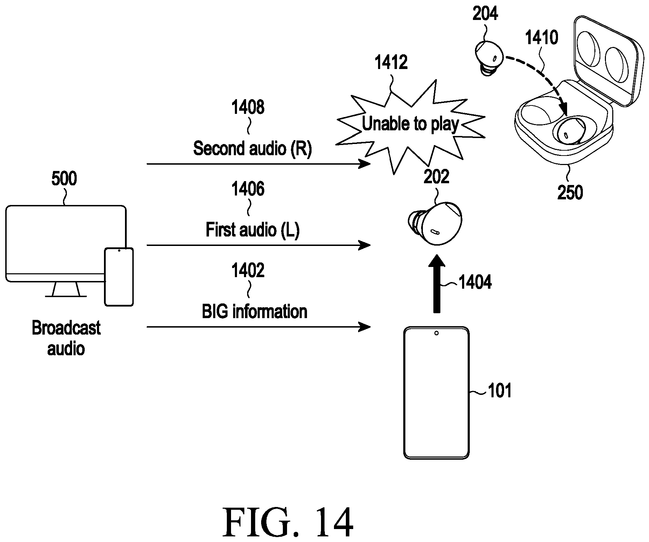

FIG. 14 is a view illustrating an example situation in which a multi-audio channel is not reproducible according to an embodiment of the disclosure.

Referring to FIG. 14, the source electronic device 500 may broadcast (e.g., advertise) BIG information 1402 (e.g., the BIG information 600 of FIG. 6) to provide a BIS-based audio service (e.g., a BIS audio service). The BIS audio service may include a plurality of audio channels (e.g., a first audio channel corresponding to left audio and a second audio channel corresponding to right audio). The source electronic device 500 may transmit (e.g., broadcast) the first audio data 1406 (e.g., left audio data packets) corresponding to the first audio channel and the second audio data 1408 (e.g., right audio data packets) corresponding to the second audio channel, as defined in the BIG information 1402.

The first electronic device 202 may receive BIG information 1402 from the source electronic device 500 via BLE scan or based on synchronization information 1404 provided from the electronic device 101 serving as an assistant, and may receive first audio data 1406 based on the BIG information 1402. The second electronic device 202 may receive the BIG information 1402 from the source electronic device 500 through a BLE scan or based on the synchronization information 1404 provided from the electronic device 101 acting as an assistant, and while receiving the second audio data 1408 based on the BIG information 1402, the audio reproduction may be rendered impossible (1412) as it is received (1410) in the case (e.g., the external electronic device 250).

In an embodiment, the first electronic device 202 and the second electronic device 202 may be true wireless stereo (TWS) devices such as ear wearable devices configured to receive a first audio channel corresponding to left audio and a second audio channel corresponding to right audio. In an embodiment, the first electronic device 202 and the second electronic device 202 may be some of multi-channel audio devices (e.g., a 5.1-channel speaker device) configured to receive two or more audio channels (e.g., a front left channel, a front right channel, a front center channel, a front woofer channel, a back left channel, and a back right channel). The first electronic device 202 may be configured to receive at least one of the plurality of audio channels. The second electronic device 204 may be configured to receive at least one other audio channel among the plurality of audio channels.

Although not illustrated, in various embodiments, the second electronic device 204 may no longer be able to reproduce audio due to various reasons such as a low battery level, disconnection, non-wearing, or power off.

According to embodiments of the disclosure, the first electronic device 202 may be configured not only to receive the first audio data 1406 but also to additionally receive the second audio data 1408 on behalf of the second electronic device 204 when the second electronic device 204 is unable to reproduce the audio. The first electronic device 202 may output reproduction audio data (e.g., stereo audio data) generated by merging the first audio data 1406 and the second audio data 1408 to a speaker (e.g., the speaker 354).

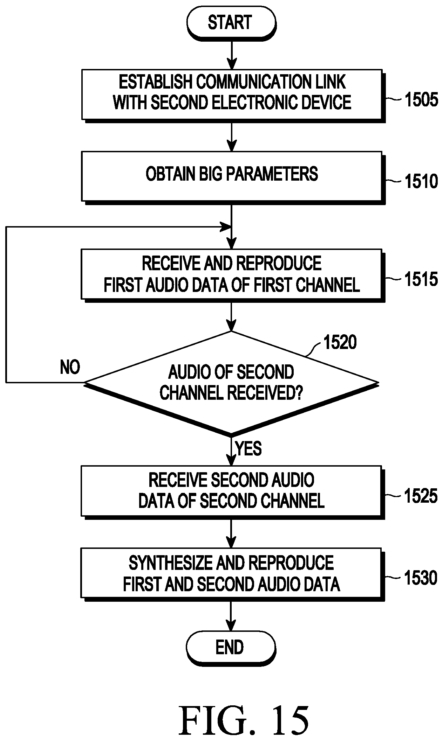

FIG. 15 is a flowchart illustrating a procedure for receiving a multi-audio channel according to an embodiment of the disclosure. In an embodiment, at least one of operations to be described below may be executed by the processor 310 of the first electronic device 202. According to embodiments, at least one of operations to be described below may be omitted, modified, or ordered differently. Here, it is described that the operations described below are performed by the first electronic device 202 (e.g., the processor 310), but the same description may be applied to another sink electronic device 505 (e.g., the second electronic device 204).

Referring to FIG. 15, in operation 1505, the first electronic device 202 (e.g., the processor 310) may establish a communication link (e.g., a BLE-based ACL link for bridge communication) with the second electronic device 204. In operation 1510, the first electronic device 202 (e.g., the processor 310) may receive BIG information (e.g., the BIG information 600 of FIG. 6) including BIG parameters for receiving the BIS audio service.

In an embodiment, the first electronic device 202 (e.g., the processor 310) may receive EA data from the source electronic device 500 through a BLE scan and may receive PA data (e.g., the AUX_SYNC_IND packet 406) including the BIG information from the source electronic device 500 based on the EA data. In an embodiment, the first electronic device 202 (e.g., the processor 310) may receive synchronization information from an external electronic device (e.g., the electronic device 101) acting as an assistant, and may receive PA data (e.g., the AUX_SYNC_IND packet 406) including the BIG information from the source electronic device 500 based on the synchronization information. In an embodiment, the first electronic device 202 (e.g., the processor 310) may receive the BIG information from an external electronic device (e.g., the electronic device 101) acting as an assistant.

In operation 1515, the first electronic device 202 (e.g., the processor 310) may receive first audio data of the first audio channel from the source electronic device 500 based on first BIG parameters related to the first audio channel (e.g., BIS1) to be received by the first electronic device 202 among the BIG information, and may output (e.g., reproduce) the first audio data through a speaker (e.g., the speaker 354).

In operation 1520, the first electronic device 202 (e.g., the processor 310) may determine whether to receive second audio data of another audio channel (e.g., a second audio channel corresponding to BIS2) belonging to the same BIS audio service as the first audio channel, based on the BIG information. In an embodiment, the first electronic device 202 (e.g., the processor 310) may determine whether to receive the second audio data of the second audio channel, based on a designated condition (e.g., at least one of the conditions of operation 1610, operation 1615, operation 1620, operation 1625, operation 1630, or a combination thereof). In an embodiment, the first electronic device 202 (e.g., the processor 310) may determine to receive the second audio data of the second audio channel based on identifying that the second electronic device 204 is in a state of being unable to operate such as being stored in the case, low battery level, disconnection, non-wearing, or power off.

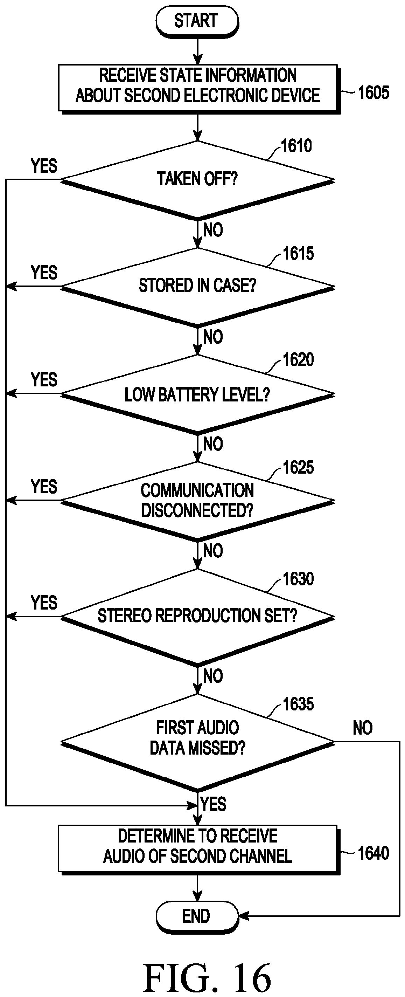

In an embodiment, the first electronic device 202 (e.g., the processor 310) may determine to receive the second audio data, based on receiving state information (e.g., the state information 1710 and 1810) indicating that the second electronic device 204 corresponding to the second audio channel is unable to reproduce the second audio channel, using the communication link established in operation 1505. In an embodiment, the first electronic device 202 (e.g., the processor 310) may determine to receive the second audio data, based on receiving state information (e.g., the state information 2010) indicating that the second electronic device 204 is unable to reproduce the second audio channel or a stereo reproduction command (e.g., the stereo reproduction command 2012) instructing to reproduce the second audio channel from an external electronic device (e.g., the electronic device 101 acting as an assistant). According to various embodiments, operation 1520 may include at least one of operation 1605, 1610, 1615, 1620, 1625, 1630, 1635, or 1640 of FIG. 16.

When it is determined to receive the second audio data in operation 1520, the first electronic device 202 (e.g., the processor 310) may proceed to operation 1525. On the other hand, when it is not determined to receive the second audio data, the first electronic device 202 (e.g., the processor 310) may return to operation 1515.

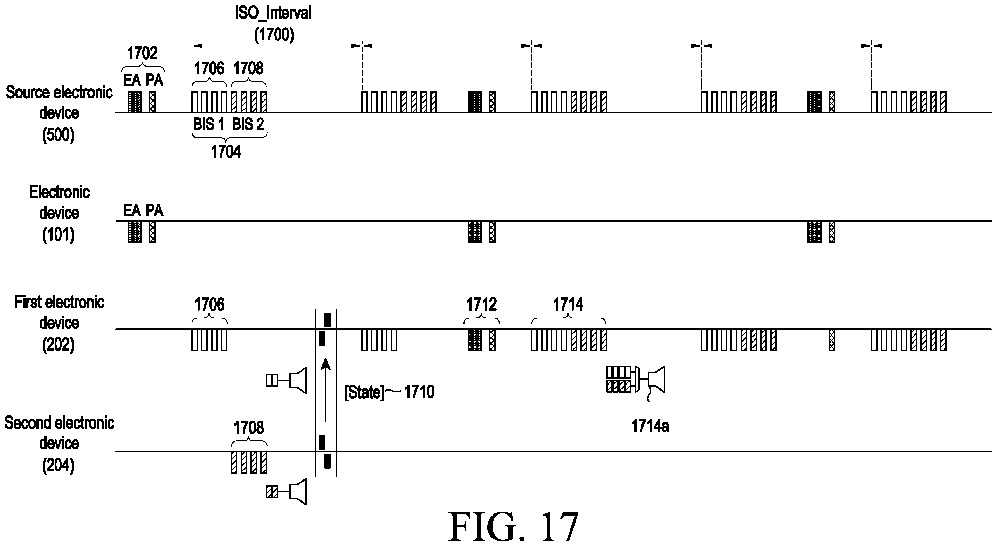

In operation 1525, the first electronic device 202 (e.g., the processor 310) may additionally receive the second audio data of the second audio channel from the source electronic device 500 while continuously receiving the first audio data of the first audio channel. In an embodiment, the first electronic device 202 (e.g., the processor 310) may receive the second audio data of the second audio channel based on the second BIG parameters related to the second audio channel (e.g., BIS2) among the BIG information 600 already received and stored in operation 1510. In an embodiment, the first electronic device 202 (e.g., the processor 310) may re-receive advertising data (e.g., at least one of ADV_EXT_IND, AUX_ADV_IND, or AUX_SYNC_IND) including the BIG information 600 based on BLE scan or synchronization information received from the electronic device 101, and may receive audio data (e.g., second audio data) of the second audio channel based on BIG parameters (e.g., second BIG parameters) related to the second audio channel (e.g., BIS2) of the BIG information 600. Various embodiments related to operation 1525 may be described with reference to FIG. 17, FIG. 18, FIG. 19, and/or FIG. 20.

In operation 1530, the first electronic device 202 (e.g., the processor 310) may output (e.g., reproduce) reproduction audio data (e.g., stereo audio data) corresponding to the first audio data and the second audio data to a speaker (e.g., the speaker 354).

In an embodiment, the first electronic device 202 (e.g., the processor 310) may stop receiving the second audio data of the second audio channel (e.g., operations 1525 and 1530) based on detecting that the designated condition is met, and may return to the state (e.g., operation 1515) of receiving only the first audio data. In an embodiment, the first electronic device 202 (e.g., the processor 310) may stop receiving the second audio data of the second audio channel (e.g., operations 1525 and 1530) based on detecting that the designated condition of operation 1520 is not met, and may return to the state (e.g., operation 1515) of receiving only the first audio data.

FIG. 16 is a flowchart illustrating a procedure for determining to receive a multi-audio channel according to an embodiment of the disclosure. In an embodiment, at least one of operations to be described below may be executed by the processor 310 of the first electronic device 202. According to embodiments, at least one of operations to be described below may be omitted, modified, or ordered differently.

Referring to FIG. 16, in operation 1605, the first electronic device 202 (e.g., the processor 310) may obtain (e.g., receive) state information related to the second electronic device 204. In an embodiment, the state information may be received from the second electronic device 204 through a communication link between the first electronic device 202 and the second electronic device 204. In an embodiment, the state information may be received from the electronic device 101 through a communication link between the first electronic device 202 and the electronic device 101 acting as an assistant. In an embodiment, the state information may be received directly from the external electronic device 250 configured to receive the second electronic device 204 or may be received from the first electronic device 202 through the electronic device 101.

In an embodiment, the state information may include information indicating at least one of being received in the case, low battery level, disconnection, non-wearing, or power off of the second electronic device 204. The first electronic device 202 (e.g., the processor 310) may periodically receive state information about the second electronic device 204 or may receive the state information from the second electronic device 204, the external electronic device 250, or the electronic device 101 by transmitting a request.

In operation 1610, the first electronic device 202 (e.g., the processor 310) may determine whether the state information includes information indicating that the second electronic device 204 is not worn. The second electronic device 204 may determine whether the second electronic device 204 is worn on the user's body based on sensing that the second electronic device 204 contacts the user's body (e.g., an ear) by a sensor (e.g., the sensor 340), and may generate state information including information indicating the wearing at the time when the second electronic device 204 is worn on the user or may generate state information including information indicating non-wearing at the time when the second electronic device 204 is taken off by the user. The second electronic device 204 may stop reproducing audio based on detecting that the second electronic device 204 is not worn. The state information may be transferred to the first electronic device 202 or the electronic device 101.

When the state information includes information indicating non-wearing, the first electronic device 202 (e.g., the processor 310) may proceed to operation 1640. When the state information does not include information indicating non-wearing, the first electronic device 202 (e.g., the processor 310) may proceed to operation 1615.

In operation 1615, the first electronic device 202 (e.g., the processor 310) may determine whether the state information includes information indicating that the second electronic device 204 is received in the case. The second electronic device 204 may determine whether the second electronic device 204 is received in the case (e.g., the external electronic device 250) based on sensing that the second electronic device 204 contacts the case by a sensor (e.g., the sensor 340), and may generate state information including information indicating that it is received in the case at the time of being received in the case or may generate state information including information indicating the case opening at the time of being removed from the case. In an embodiment, the external electronic device 250 configured to receive the second electronic device 204 may determine whether the second electronic device 204 is received in the case (e.g., the external electronic device 250) based on sensing that the second electronic device 204 contacts the external electronic device 250 by the sensor, and may generate state information including information indicating being received in the case at the time of being received in the case or may generate state information including information indicating the case opening at the time of being removed from the case. The state information may be transferred to the first electronic device 202 or the electronic device 101.

When the state information includes information indicating being received in the case, the first electronic device 202 (e.g., the processor 310) may proceed to operation 1640. When the state information does not include information indicating being not received in the case, the first electronic device 202 (e.g., the processor 310) may proceed to operation 1620.

In operation 1620, the first electronic device 202 (e.g., the processor 310) may determine whether the state information includes information indicating that the second electronic device 204 has a low battery level. Based on identifying that the battery level of the second electronic device 204 is less than a designated reference value, the second electronic device 204 may generate state information including information indicating a low battery level. The state information may be transferred to the first electronic device 202 or the electronic device 101. When the state information includes information indicating a low battery level, the first electronic device 202 (e.g., the processor 310) may proceed to operation 1640. When the state information does not include information indicating a low battery level, the first electronic device 202 (e.g., the processor 310) may proceed to operation 1625.

In operation 1625, the first electronic device 202 (e.g., the processor 310) may determine whether communication with the second electronic device 204 (e.g., the communication link established in operation 1505) is disconnected. When it is determined that the connection with the second electronic device 204 is disconnected, the first electronic device 202 (e.g., the processor 310) may proceed to operation 1640. When communication with the second electronic device 204 is not disconnected, the first electronic device 202 (e.g., the processor 310) may proceed to operation 1630. In an embodiment, the communication disconnection between the first electronic device 202 and the second electronic device 204 may be caused by any one of a request from the first electronic device 202 or the second electronic device 204, the user request, a received signal strength of the second electronic device 204 measured by the first electronic device 202 not exceeding a designated reference value, or power off of the second electronic device 204.

In operation 1630, the first electronic device 202 (e.g., the processor 310) may determine whether stereo reproduction is set based on audio configuration information related to stereo reproduction. The audio configuration information may indicate an audio channel to be output from the first electronic device 202 (e.g., the processor 310) to any one of a left audio channel, a right audio channel, or a stereo audio channel. In an embodiment, the first electronic device 202 (e.g., the processor 310) may receive the audio configuration information (e.g., a stereo reproduction command) from the electronic device 101 acting as an assistant, or may directly receive the audio configuration information (e.g., a stereo reproduction command) from the user through the input device 330. When stereo reproduction is indicated by the audio configuration information, the first electronic device 202 (e.g., the processor 310) may proceed to operation 1640. When stereo reproduction is not indicated by the audio configuration information, the first electronic device 202 (e.g., the processor 310) may proceed to operation 1635.

In operation 1635, the first electronic device 202 (e.g., the processor 310) may determine whether first audio data (e.g., a designated number or more of audio data packets or a designated number or more of consecutive audio data packets) related to the first audio channel is not received (missed) from the source electronic device 500. When it is determined that the first audio data is missed, the first electronic device 202 (e.g., the processor 310) may proceed to operation 1640. When the first audio data is not missed, the first electronic device 202 (e.g., the processor 310) may terminate the procedure.

In various embodiments, the first electronic device 202 (e.g., the processor 310) may periodically perform at least one of operation 1605, 1610, 1615, 1620, 1625, 1630, or 1635 according to a designated event or according to the user request.

In operation 1640, the first electronic device 202 (e.g., the processor 310) may determine to additionally receive the second audio data of the second audio channel from the source electronic device 500 while continuously receiving the first audio data of the first audio channel. After determining in operation 1640, the first electronic device 202 (e.g., the processor 310) may proceed to operation 1525.

In an embodiment, the first electronic device 202 (e.g., the processor 310) may determine to receive the second audio data of the second audio channel, based on satisfaction of at least two designated combinations among the conditions of operation 1610, operation 1615, operation 1620, operation 1625, operation 1630, or operation 1635. In an embodiment, the first electronic device 202 (e.g., the processor 310) may stop the operation (e.g., operation 1525 and operation 1530) of receiving the second audio data of the second audio channel and may return to the state (e.g., operation 1515) of receiving only the first audio data, based on detecting that a combination of at least designated two among the conditions of operation 1610, operation 1615, operation 1620, operation 1625, operation 1630, or operation 1635 are not met while receiving both the first audio data and the second audio data.

In an embodiment, the first electronic device 202 (e.g., the processor 310) may return to the state (e.g., operation 1515) of receiving only the first audio data, based on reception of state information indicating that the second electronic device 204 is worn on the body (e.g., "No" in operation 1610). In an embodiment, the first electronic device 202 (e.g., the processor 310) may return to the state (e.g., operation 1515) of receiving only the first audio data based on receiving state information indicating that the second electronic device 204 is removed from the case (e.g., "No" in operation 1610).

In an embodiment, the first electronic device 202 (e.g., the processor 310) may return to the state (e.g., operation 1515) of receiving only the first audio data, based on reception of information indicating that the second electronic device 204 is not at a low battery level. In an embodiment, based on detecting that the communication with the second electronic device 204 (e.g., the communication link established in operation 1505) is restored, the first electronic device 202 (e.g., the processor 310) may return to the state (e.g., operation 1515) of receiving only the first audio data. In an embodiment, the first electronic device 202 (e.g., the processor 310) may return to the state (e.g., operation 1515) of receiving only the first audio data based on detecting that stereo reproduction is released by the audio configuration information.

FIG. 17 is a timing diagram illustrating an operation for receiving advertising data for stereo reproduction according to an embodiment of the disclosure.

Referring to FIG. 17, the source electronic device 500 may transmit audio data 1704 of a first audio channel (e.g., BIS1) and a second audio channel (e.g., BIS2) in each interval 1700 (e.g., ISO_interval) while transmitting advertising data 1702 including EA data and/or PA data at a designated advertising time.

The first electronic device 202 and the second electronic device 204 may receive the EA data and the PA data of the advertising data 1702 directly through a BLE scan or receive the PA data of the advertising data 1702 based on the synchronization information received from the electronic device 101 acting as an assistant and obtain the BIG information (e.g., the BIG information 600 of FIG. 6) included in the PA data (e.g., AUX_SYNC_IND packet) and receive and reproduce the audio data 1704 based on the BIG processors in the BIG information 600.

The audio data 1704 may include first audio data 1706 of the first audio channel and second audio data 1708 of the second audio channel. The first electronic device 202 may receive the first audio data 1706 from the source electronic device 500 and may reproduce the first audio data 1706. The second electronic device 204 may receive the second audio data 1708 from the source electronic device 500 and may reproduce the second audio data 1708.

The first electronic device 202 may receive, from the second electronic device 204, state information 1710 indicating at least one of non-wearing, storage in the case, or low battery level of the second electronic device 204. Although not illustrated, in another embodiment, the first electronic device 202 may receive, from the electronic device 101, information (not illustrated) related to non-wearing, storage in the case, low battery level, or communication disconnection of the second electronic device 204, or may identify disconnection of communication with the second electronic device 204.

The first electronic device 202 may start searching for advertising data (e.g., the advertising data 1712) including EA data and PA data based on receiving the state information 1710. The first electronic device 202 may continue to receive and reproduce the first audio data until the advertising data 1712 is retrieved. The first electronic device 202 may receive the advertising data 1712 and obtain BIG parameters of the second audio channel related to the second electronic device 204 from the BIG information 600 included in the advertising data 1712.

The first electronic device 202 may receive audio data 1714 including both the first audio data of the first audio channel and the second audio data of the second audio channel (e.g., BIS2) from the source electronic device 500 based on the BIG parameters. The first electronic device 202 may synthesize the first audio data and the second audio data to output (e.g., reproduce 1714a) stereo data to the speaker 354.

After receiving the advertising data 1712, the first electronic device 202 may continuously receive the PA data according to the period of the PA data to receive the first audio data and the second audio data. In an embodiment, the first electronic device 202 may continuously receive the first audio data and the second audio data based on the PA data of the advertising data 1712. In an embodiment, the reception of the first audio data and the second audio data and the reproduction of the stereo data may be performed until it is identified that the state of the second electronic device 204 (e.g., non-wearing, storage in the case, low battery level, disconnection, or power-off) is restored. In an embodiment, when it is identified that the second electronic device 204 is worn, removed from the case, the battery level increases, or it is reconnected to the first electronic device 202, the first electronic device 202 may stop receiving the second audio data and reproducing stereo, and may receive only the first audio data to reproduce mono audio.

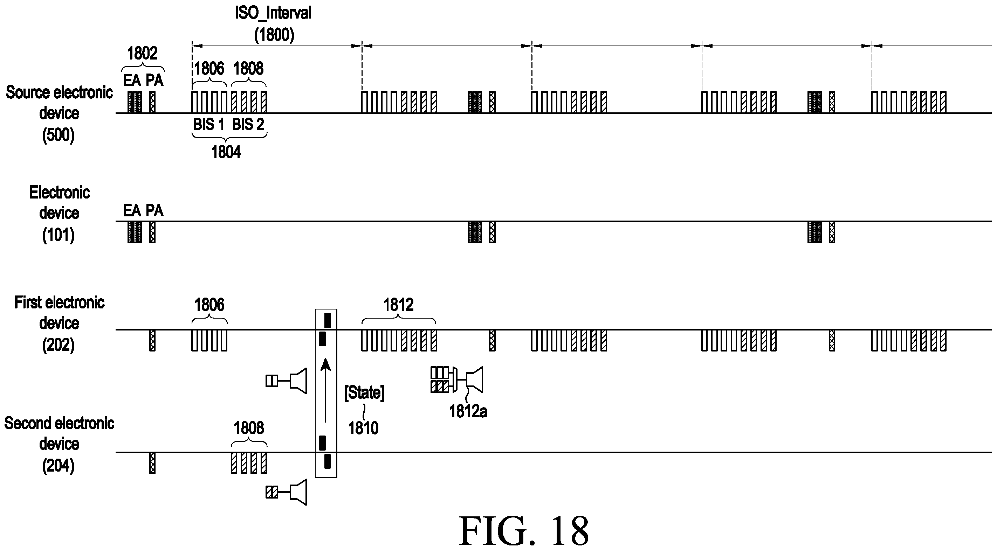

FIG. 18 is a timing diagram illustrating an operation for stereo reproduction based on pre-stored advertising data according to an embodiment of the disclosure.

Referring to FIG. 18, the source electronic device 500 may transmit audio data 1804 of a first audio channel (e.g., BIS1) and a second audio channel (e.g., BIS2) in each interval 1800 (e.g., ISO_interval) while transmitting advertising data 1802 including EA data and/or PA data at a designated advertising time.

The first electronic device 202 and the second electronic device 204 may receive PA data of the advertising data 1802, may obtain BIG information (e.g., the BIG information 600 of FIG. 6) included in the PA data (e.g., the AUX_SYNC_IND packet), and may receive and reproduce audio data 1804 based on BIG parameters in the BIG information 600.

The audio data 1804 may include first audio data 1806 of the first audio channel and second audio data 1808 of the second audio channel. The first electronic device 202 may receive the first audio data 1806 from the source electronic device 500 and may reproduce the first audio data 1806. Although not receiving the second audio data 1808, the first electronic device 202 may previously store not only the BIG parameters related to the first audio channel but also the BIG parameters related to the second audio channel when obtaining the advertising data 1802. The second electronic device 204 may receive the second audio data 1808 from the source electronic device 500 and may reproduce the second audio data 1808. Although the second electronic device 204 does not receive the first audio data 1806, when obtaining the advertising data 1802, the second electronic device 204 may previously store not only the BIG parameters related to the second audio channel but also the BIG parameters related to the first audio channel.

The first electronic device 202 may receive, from the second electronic device 204, state information 1810 indicating at least one of non-wearing, storage in the case, or low battery level of the second electronic device 204. Although not illustrated, in another embodiment, the first electronic device 202 may receive, from the electronic device 101, information (not illustrated) related to non-wearing, storage in the case, low battery level, or communication disconnection of the second electronic device 204, or may identify disconnection of communication with the second electronic device 204.

Based on receiving the state information 1810, the first electronic device 202 may receive, from the source electronic device 500, audio data 1812 including both the first audio data of the first audio channel and the second audio data of the second audio channel (e.g., BIS2), based on pre-stored BIG parameters of the second audio channel. The first electronic device 202 may synthesize the first audio data and the second audio data to output (e.g., reproduce 1812a) stereo data to the speaker 354. Thereafter, the first electronic device 202 may receive PA data according to the period of the PA data and may continuously receive the first audio data and the second audio data. In an embodiment, the reception of the first audio data and the second audio data and the reproduction of the stereo data may be performed until it is identified that the state of the second electronic device 204 is restored.

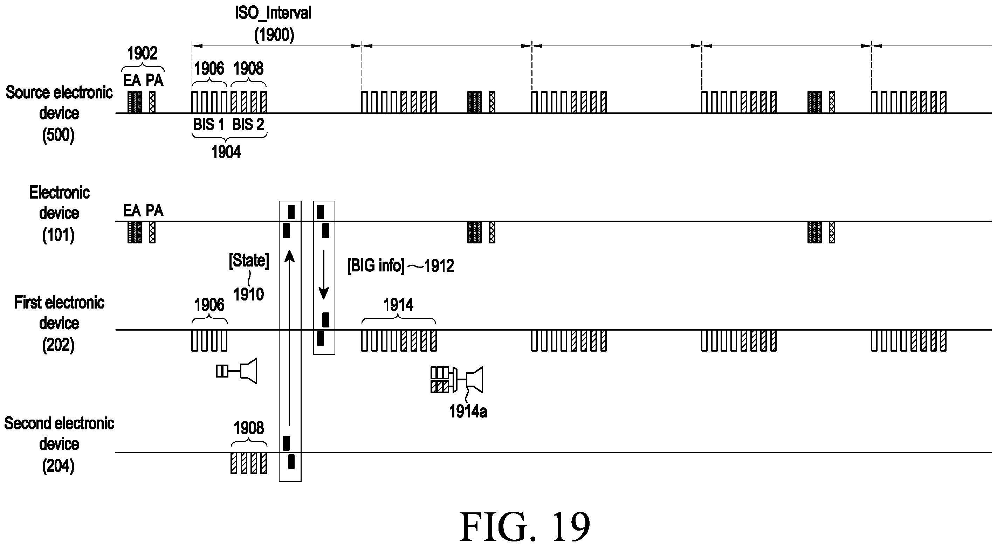

FIG. 19 is a timing diagram illustrating an operation for receiving advertising data for stereo reproduction from an assistant according to an embodiment of the disclosure.

Referring to FIG. 19, the source electronic device 500 may transmit audio data 1904 of a first audio channel (e.g., BIS1) and a second audio channel (e.g., BIS2) in each interval 1900 (e.g., ISO_interval) while transmitting advertising data 1902 at a designated advertising time.

The first electronic device 202 and the second electronic device 204 may receive PA data of the advertising data 1902, may obtain BIG information (e.g., the BIG information 600 of FIG. 6) included in the PA data (e.g., the AUX_SYNC_IND packet), and may receive and reproduce audio data 1904 based on BIG parameters in the BIG information 600.

The audio data 1904 may include first audio data 1906 of the first audio channel and second audio data 1908 of the second audio channel. The first electronic device 202 may receive the first audio data 1906 from the source electronic device 500 and may reproduce the first audio data 1906. The second electronic device 204 may receive the second audio data 1908 from the source electronic device 500 and may reproduce the second audio data 1908.

The electronic device 101 may receive, from the second electronic device 204, state information 1910 indicating non-wearing, storage in the case, or low battery level of the second electronic device 204. Based on receiving the state information 1910, the electronic device 101 may determine that the second electronic device 204 is in a state of being unable to reproduce audio and may transfer BIG information 1912 (e.g., all of the BIG information 600 of FIG. 6 or BIG parameters of at least the second audio channel) for stereo reproduction to the first electronic device 202. Although not illustrated, the electronic device 101 may transfer BIG information 1912 for stereo reproduction to the first electronic device 202 for stereo reproduction according to a user request. In an embodiment, the BIG information 1912 for stereo reproduction may be transmitted to the first electronic device 202 together with a stereo reproduction command.

The first electronic device 202 may receive audio data 1914 including both the first audio data of the first audio channel and the second audio data of the second audio channel (e.g., BIS2) from the source electronic device 500 based on the BIG information 1912 for stereo reproduction. The first electronic device 202 may synthesize the first audio data and the second audio data to output (e.g., reproduce 1914a) stereo data to the speaker 354. In an embodiment, the reception of the first audio data and the second audio data and the reproduction of the stereo data may be performed until it is identified that the state of the second electronic device 204 is restored, or until an instruction to stop stereo reproduction (e.g., a mono reproduction command) is received from the external electronic device (e.g., the electronic device 101).

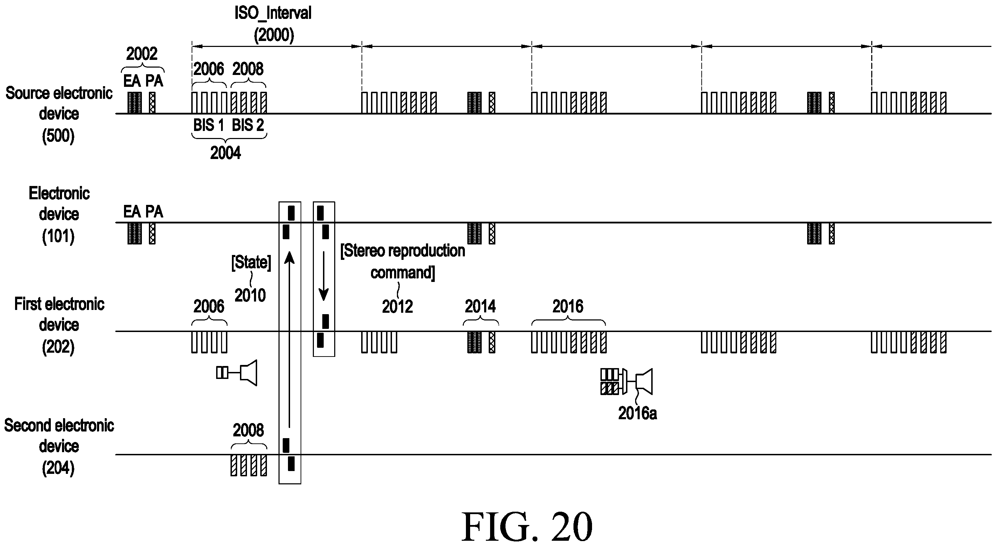

FIG. 20 is a timing diagram illustrating an operation for receiving a stereo reproduction command from an assistant according to an embodiment of the disclosure.

Referring to FIG. 20, the source electronic device 500 may transmit audio data 2004 of a first audio channel (e.g., BIS1) and a second audio channel (e.g., BIS2) in each interval 2000 (e.g., ISO_interval) while transmitting advertising data 2002 including EA data and/or PA data at a designated advertising time.

The first electronic device 202 and the second electronic device 204 may receive PA data of the advertising data 2002, may obtain BIG information (e.g., the BIG information 600 of FIG. 6) included in the PA data (e.g., the AUX_SYNC_IND packet), and may receive and reproduce audio data 2004 based on BIG parameters in the BIG information 600.

The audio data 2004 may include first audio data 2006 of the first audio channel and second audio data 2008 of the second audio channel. The first electronic device 202 may receive the first audio data 2006 from the source electronic device 500 and may reproduce the first audio data 2006. The second electronic device 204 may receive the second audio data 2008 from the source electronic device 500 and may reproduce the second audio data 2008.

The electronic device 101 may receive, from the second electronic device 204, state information 2010 indicating non-wearing, storage in the case, or low battery level of the second electronic device 204. Based on receiving the state information 2010, the electronic device 101 may determine that the second electronic device 204 is in a state of being unable to reproduce audio, and may transmit the stereo reproduction command 2012 to the first electronic device 202. Although not illustrated, the electronic device 101 may transfer the stereo reproduction command 2012 to the first electronic device 202 for stereo reproduction according to the user request.

The first electronic device 202 may receive advertising data (e.g., the advertising data 2014) including EA data and PA data from the source electronic device 500 through BLE scan, based on the stereo reproduction command 2012. The first electronic device 202 may continue to receive and reproduce the first audio data until the advertising data 2014 is retrieved. The first electronic device 202 may receive the advertising data 2014 and obtain BIG parameters of the second audio channel related to the second electronic device 204 from the BIG information 600 included in the advertising data 2014.

In an embodiment, the stereo reproduction command 2012 may include BIG parameters of the second audio channel required for the first electronic device 202 to receive the second audio data. In an embodiment, the stereo reproduction command 2012 may include synchronization information to be used for the first electronic device 202 to receive the BIG parameters of the second audio channel from the source electronic device 500. In an embodiment, after receiving the stereo reproduction command 2012, the first electronic device 202 may receive the BIG parameters of the second audio channel or the synchronization information from the electronic device 101.

The first electronic device 202 may receive audio data 2016 including both the first audio data of the first audio channel and the second audio data of the second audio channel (e.g., BIS2) from the source electronic device 500 based on the BIG parameters. The first electronic device 202 may synthesize the first audio data and the second audio data to output (e.g., reproduce 2016a) stereo data to the speaker 354.

After receiving the advertising data 2014, the first electronic device 202 may receive the first audio data and the second audio data. In an embodiment, the first electronic device 202 may periodically receive PA data of the advertising data 2014 while receiving the first audio data and the second audio data, and may continuously receive the first audio data and the second audio data based on the PA data. In an embodiment, the reception of the first audio data and the second audio data and the reproduction of the stereo data may be performed until it is identified that the state of the second electronic device 204 is restored, or until an instruction to stop stereo reproduction (e.g., a mono reproduction command) is received from the external electronic device (e.g., the electronic device 101).

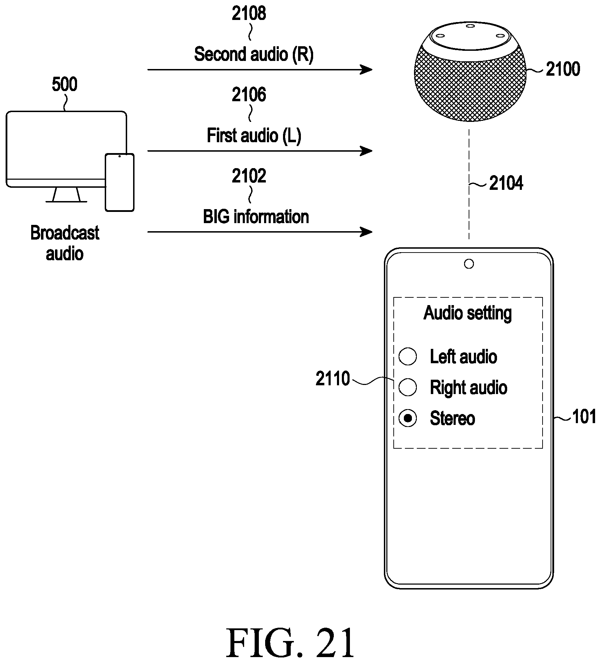

FIG. 21 is a view illustrating a user interface for setting a multi-audio channel according to an embodiment of the disclosure.

Referring to FIG. 21, the sink electronic device 2100 (e.g., the first electronic device 202 and/or the second electronic device 204) may obtain BIG information 2102 (e.g., the BIG information 600) from the source electronic device 500 based on synchronization information (not shown) provided from the electronic device 101 acting as an assistant or through a BLE scan. The BIG information 2102 may define, e.g., two audio channels (e.g., a left audio channel and a right audio channel) for a stereo audio service based on Num_BIS=2. The sink electronic device 2100 may receive a first audio (e.g., a left audio channel) 2106 and/or a second audio (e.g., a right audio channel) 2108 based on the BIG information 2102. The sink electronic device 2100 may be configured to reproduce audio of at least one audio channel set by an external electronic device (e.g., the electronic device 101).

The electronic device 101 acting as an assistant of the sink electronic device 2100 may display an audio setting menu 2110 for setting an audio output of a BIS audio service including multiple audio channels (e.g., Num_BIS=2) for the sink electronic device 2100. The electronic device 101 may display the audio setting menu 2110 based on a user input or based on identifying at least one of power on, operation start, or wearing of the sink electronic device 2100.

The audio setting menu 2110 may include at least one item (e.g., "left audio" or "right audio") for selecting audio output for each audio channel of the multiple audio channels according to the BIG information 2102 of the BIS audio service, as well as an item (e.g., "stereo") for selecting multi-audio output. The electronic device 101 may transmit an audio reproduction command 2104 including information (e.g., at least one of BIS index, audio location, or access address) indicating the audio channel to be output to the sink electronic device 2100 based on receiving a user input on any one of the above items. In an embodiment, the audio reproduction command 2104 may include information for identifying one or more audio channels requiring audio reproduction and/or information (e.g., synchronization information) required for audio output.

In an embodiment, when a user input is detected on the item "left audio" in the audio setting menu 2110, the electronic device 101 may transmit an audio reproduction command 2104 (e.g., a left audio reproduction command) instructing left audio reproduction to the sink electronic device 2100. The sink electronic device 2100 may receive the first audio 2106 (e.g., left audio data packets) corresponding to the left audio channel based on the BIG information 2102 (e.g., BIG information obtained based on any one of the procedures of FIG. 17, 18, 19, or 20) based on the audio reproduction command 2104, and may output (e.g., reproduce) the first audio 2106 to a speaker (e.g., the speaker 354).

In an embodiment, when a user input is detected on the item "right audio" in the audio setting menu 2110, the electronic device 101 may transmit an audio reproduction command 2104 (e.g., a right audio reproduction command) instructing right audio reproduction to the sink electronic device 2100. The sink electronic device 2100 may receive the second audio 2108 (e.g., right audio data packets) corresponding to the right audio channel based on the BIG information 2102 (e.g., BIG information obtained based on any one of the procedures of FIG. 17, 18, 19, or 20) based on the audio reproduction command 2104, and may output (e.g., reproduce) the second audio 2108 to a speaker (e.g., the speaker 354).

In an embodiment, when a user input is detected on the item "stereo" in the audio setting menu 2110, the electronic device 101 may transmit an audio reproduction command 2104 (e.g., a stereo reproduction command) instructing stereo audio reproduction to the sink electronic device 2100. The sink electronic device 2100 may receive the first audio 2106 (e.g., left audio data packets) corresponding to the left audio channel and the second audio 2108 (e.g., right audio data packets) corresponding to the right audio channel based on the BIG information 2102 (e.g., BIG information obtained based on any one of the procedures of FIGS. 17, 18, 19, or 20) based on the audio reproduction command 2104, may synthesize (e.g., synchronize) the first audio 2106 and the second audio 2108, and may output (e.g., reproduce) the synthesized (e.g., synchronized) first audio 2106 and second audio 2108 to a speaker (e.g., the speaker 354).

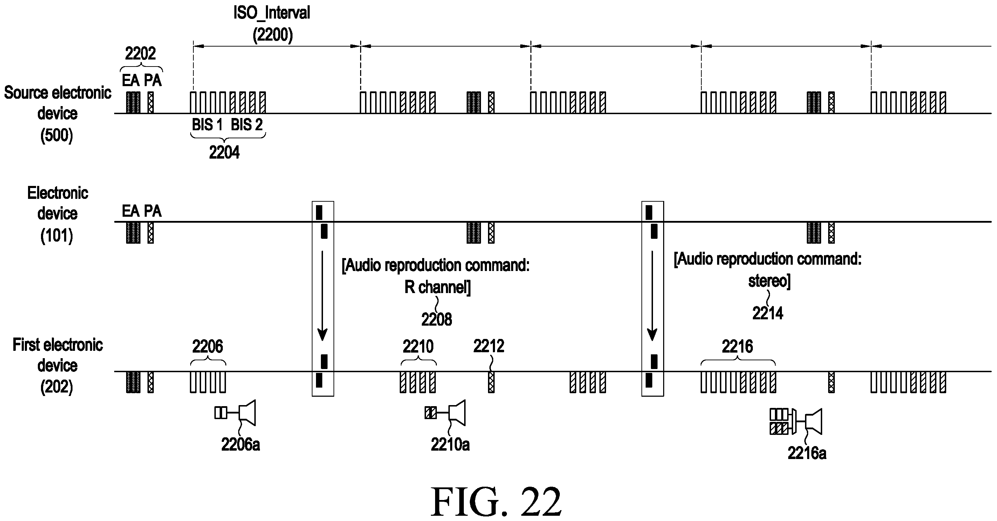

FIG. 22 is a view illustrating an audio setting for a multi-audio channel according to an embodiment of the disclosure.

Referring to FIG. 22, the source electronic device 500 may transmit audio data 2204 of a first audio channel (e.g., BIS1) and a second audio channel (e.g., BIS2) in each interval 2200 (e.g., ISO_interval) while transmitting advertising data 2202 including EA data and PA data at a designated advertising time. The first electronic device 202 may receive the advertising data 2202, and may obtain BIG parameters related to the first audio channel (e.g., the left audio channel) among the BIG information 2102 included in the advertising data 2202 according to the default setting (e.g., the left audio output) of the first electronic device 202. The first electronic device 202 may receive first audio data packets 2206 of a first audio channel among the audio data 2204 based on the BIG parameters and may reproduce (2206a) the first audio data packets 2206.

The electronic device 101 may receive the advertising data 2202 through BLE scan and may obtain BIG information 2102 (e.g., BIG information 600) included in the advertising data 2202. The electronic device 101 may display the audio setting menu 2110 based on the BIG information 2102, and may receive a user input for selecting the second audio channel (e.g., the right audio channel) through the audio setting menu 2110. The electronic device 101 may transmit an audio reproduction command 2208 including information (e.g., "R channel") indicating reproduction of the second audio channel to the first electronic device 202.

From the interval after receiving the audio reproduce command 2208, the first electronic device 202 may receive the second audio data packets 2210 of the second audio channel based on the BIG information 2102 (e.g., BIG information obtained based on any one of the procedures of FIG. 17, 18, 19, or 20) and reproduce the second audio data packets 2210a. By the audio reproduce command 2208, the first electronic device 202 may receive only the second audio data packets 2210 without receiving the first audio data packets.

The first electronic device 202 may be configured to perform PA synchronization by itself. In an embodiment, the first electronic device 202 may receive PA data (e.g., the AUX_SYNC_IND packet 406) again through EA/PA search based on receiving the audio reproduction command 2208 during the BIS audio service. In an embodiment, the first electronic device 202 may previously store BIG parameters of multiple audio channels among BIS information (e.g., BIG information included in the advertising data 2202) obtained before receiving the audio reproduction command 2208, and may receive the second audio data packets 2210 by the stored BIG parameters when the audio reproduction command 2208 is received.

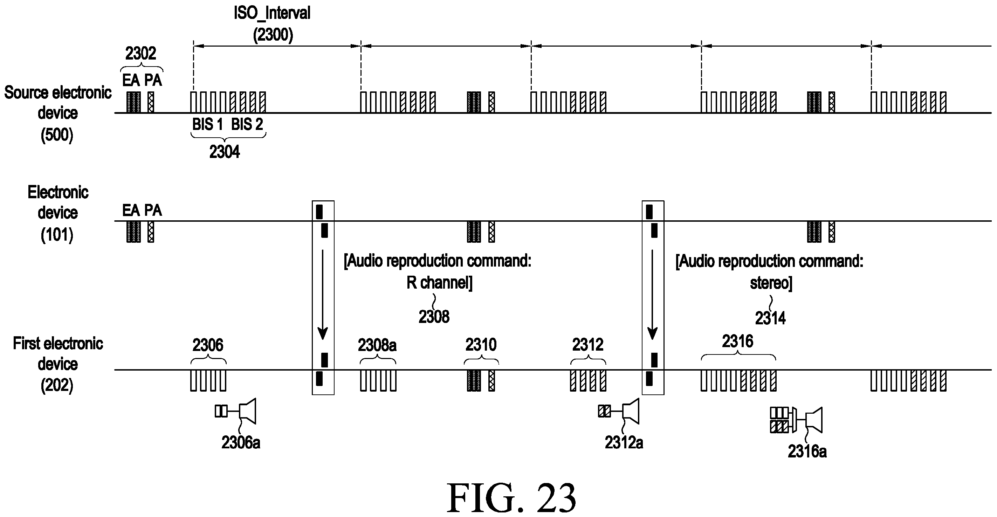

FIG. 23 is a view illustrating an operation for searching for advertising data after receiving an audio reproduction command according to an embodiment of the disclosure.

Referring to FIG. 23, the source electronic device 500 may transmit audio data 2304 of a first audio channel (e.g., BIS1) and a second audio channel (e.g., BIS2) in each interval 2300 (e.g., ISO_interval) while transmitting advertising data 2302 including EA data and/or PA data at a designated advertising time. The first electronic device 202 may receive the advertising data 2302, and may obtain BIG parameters related to the first audio channel (e.g., the left audio channel) among the BIG information 2102 included in the advertising data 2302 according to the default setting (e.g., the left audio output) of the first electronic device 202. The first electronic device 202 may receive first audio data packets 2306 of a first audio channel among the audio data 2304 based on the BIG parameters and may reproduce (2306a) the first audio data packets 2306.

The electronic device 101 may receive the advertising data 2302 through BLE scan and may obtain BIG information 2102 (e.g., BIG information 600) included in the advertising data 2302. The electronic device 101 may display the audio setting menu 2110 based on the BIG information 2102, and may receive a user input for selecting the second audio channel (e.g., the right audio channel) through the audio setting menu 2110. The electronic device 101 may transmit an audio reproduction command 2308 including information (e.g., "R channel") indicating reproduction of the second audio channel to the first electronic device 202.

The first electronic device 202 may re-receive at least PA data (e.g., the AUX_SYNC_IND packet 406) among the advertising data 2310 transmitted by the source electronic device 500 through EA/PA search based on reception of the audio reproduction command 2308 during the BIS audio service. The first electronic device 202 may obtain BIG information from the PA data. After receiving the audio reproduction command 2308, the first electronic device 202 may continuously receive the first audio data packets 2308a during at least one interval until the BIG information is obtained again, and may reproduce the first audio data packets.

The first electronic device 202 may receive the second audio data packets 2312 of the second audio channel based on the BIG information 2102 obtained from the advertising data 2310 and may reproduce (2312a) the second audio data packets 2312. After obtaining the BIG information 2102 from the advertising data 2310, the first electronic device 202 may receive only the second audio data packets 2312 without receiving the first audio data packets.

The electronic device 101 may receive a user input for selecting the stereo output (e.g., the left audio channel and the right audio channel) through the audio setting menu 2110. The electronic device 101 may transmit an audio reproduction command 2314 including information (e.g., "stereo channel") instructing stereo output to the first electronic device 202.

The first electronic device 202 may receive the audio data 2316 including both the first audio (e.g., the left audio data packets) corresponding to the left audio channel and the second audio (e.g., the right audio data packets) corresponding to the right audio channel based on the BIG information 2102 (e.g., the BIG information obtained based on any one of the procedures of FIG. 17, 18, 19, or 20) based on reception of the audio reproduction command 2314, may synthesize (e.g., synchronize) the first audio and the second audio, and may reproduce (2416a) the synthesized audios.

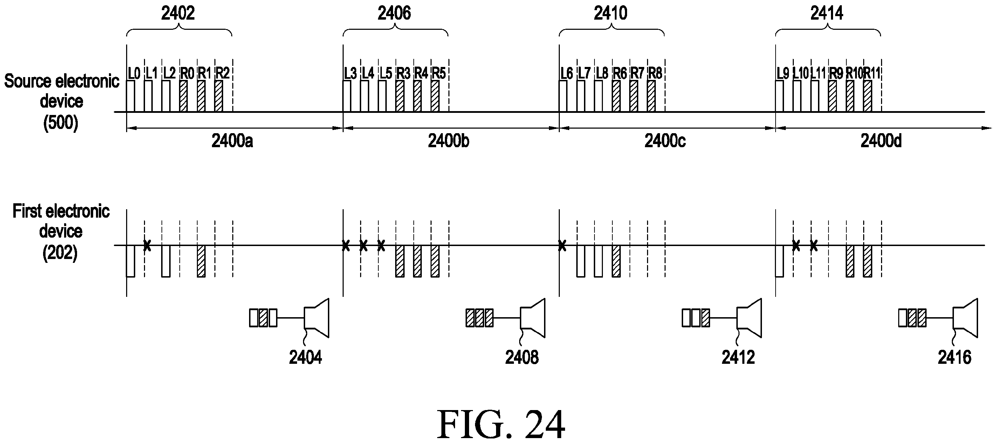

FIG. 24 is a view illustrating an operation for receiving audio of a multi-audio channel in a packet loss situation according to an embodiment of the disclosure.

Referring to FIG. 24, the source electronic device 500 may transmit first audio data packets (e.g., L packets) of the first audio channel and second audio data packets (e.g., R packets) of the second audio channel in each interval (e.g., ISO_interval) of the BIS audio service. BIG parameters related to both the first audio channel and the second audio channel among BIG information (not shown) (e.g., the BIG information 600) transmitted from the source electronic device 500 of the first electronic device 202 may be stored.

The audio data packets 2402 transmitted from the source electronic device 500 in a first interval 2400a may include first audio data packets (e.g., packets L0, L1, and L2) and second audio data packets (e.g., packets R0, R1, and R2). The first electronic device 202 may attempt to receive first audio data packets (e.g., L0, L1, and L2) among the audio data packets 2402 according to a default setting (e.g., left audio output) of the first electronic device 202 or an audio reproduction command (e.g., left audio reproduction command) from the electronic device 101. The first electronic device 202 may identify that some (e.g., L1) of the first audio data packets (e.g., L0, L1, and L2) are lost, and may receive the second audio data packet (e.g., R1) of the same order among the second audio data packets transmitted from the source electronic device 500 within the same interval (i.e., the first interval 2400a). The first electronic device 202 may synthesize the R1 packet instead of the lost L1 packet with the L0 and L2 packets normally received, and may reproduce (2404) the synthesized audio data packets L0, R1, and L2.

The audio data packets 2406 transmitted from the source electronic device 500 in a second interval 2400b may include first audio data packets (e.g., L3, L4, and L5 packets) and second audio data packets (e.g., R3, R4, and R5 packets). The first electronic device 202 may attempt to receive first audio data packets (e.g., L3, L4, and L5) among the audio data packets 2406. The first electronic device 202 may identify that all of the first audio data packets (e.g., L3, L4, and L5) are lost, and may receive second audio data packets (e.g., R3, R4, and R5 packets) transmitted from the source electronic device 500 within the same interval (i.e., the second interval 2400b). The first electronic device 202 may reproduce (2408) packets R3, R4, and R5 instead of the lost packets L3, L4, and L5.

The audio data packets 2410 transmitted from the source electronic device 500 in a third interval 2400c may include first audio data packets (e.g., L6, L7, and L8 packets) and second audio data packets (e.g., R6, R7, and R8 packets). The first electronic device 202 may attempt to receive first audio data packets (e.g., L6, L7, and L8) among the audio data packets 2410 according to a default setting (e.g., left audio output) of the first electronic device 202 or an audio reproduction command (e.g., left audio reproduction command) from the electronic device 101. The first electronic device 202 may identify that some (e.g., L6) of the first audio data packets (e.g., L6, L7, and L8) are lost, and may receive the second audio data packet (e.g., R6) of the same order among the second audio data packets transmitted from the source electronic device 500 within the same interval (i.e., the third interval 2400c). The first electronic device 202 may synthesize the L7 and L8 packets normally received with the R6 packet instead of the lost L6 packet, and may reproduce (2412) the synthesized audio data packets R6, L7, and L8.

The audio data packets 2414 transmitted from the source electronic device 500 in a fourth interval 2400d may include first audio data packets (e.g., L9, L10, and L11 packets) and second audio data packets (e.g., R9, R10, and R11 packets). The first electronic device 202 may attempt to receive first audio data packets (e.g., L9, L10, and L11) among the audio data packets 2410 according to a default setting (e.g., left audio output) of the first electronic device 202 or an audio reproduction command (e.g., left audio reproduction command) from the electronic device 101. The first electronic device 202 may identify that some (e.g., L10 and L11) of the first audio data packets (e.g., L9, L10 and L11) are lost, and may receive second audio data packets (e.g., R10 and R11) of the same order among the second audio data packets transmitted from the source electronic device 500 within the same interval (i.e., the fourth interval 2400d). The first electronic device 202 may synthesize the L9 packet normally received with the R10 and R11 packets instead of the lost L10 and L11 packets, and may reproduce (2416) the synthesized audio data packets L9, R10, and R11.

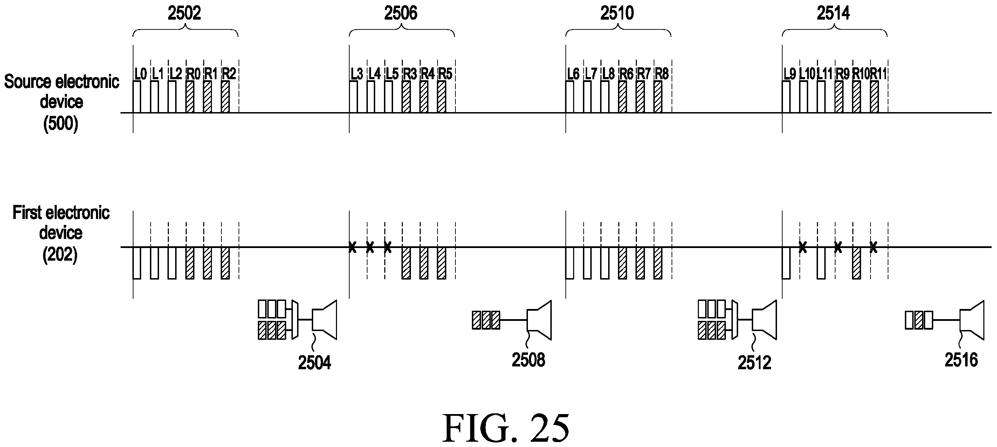

FIG. 25 is a view illustrating an operation for receiving audio in a packet loss situation during stereo reproduction according to an embodiment of the disclosure.

Referring to FIG. 25, the source electronic device 500 may transmit first audio data packets (e.g., L packets) of the first audio channel and second audio data packets (e.g., R packets) of the second audio channel in each interval (e.g., ISO_interval) of the BIS audio service. BIG parameters related to both the first audio channel and the second audio channel among BIG information (not shown) (e.g., the BIG information 600) transmitted from the source electronic device 500 of the first electronic device 202 may be stored.

In the first interval, the first electronic device 202 may receive first audio data packets (e.g., L0, L1, and L2) and second audio data packets (e.g., R0, R1, and R2 packets) among the audio data packets 2402 transmitted from the source electronic device 500 according to a stereo reproduction command from the electronic device 101. The first electronic device 202 may synchronize and synthesize the normally received audio data packets L0, R0, L1, R1, L2, and R2, and may reproduce (2504) the synthesized audio data packets L/R0, L/R1, and L/R2.

In the second interval, the first electronic device 202 may attempt to receive first audio data packets (e.g., L3, L4, and L5 packets) and second audio data packets (e.g., R3, R4, and R5 packets) among the audio data packets 2506 transmitted from the source electronic device 500. The first electronic device 202 may lose all of the first audio data packets (e.g., L3, L4, and L5) and may receive the second audio data packets (e.g., R3, R4, and R5 packets). The first electronic device 202 may reproduce the R3, R4, and R5 packets 2508 without the lost L3, L4, and L5 packets.

In the third interval, the first electronic device 202 may receive first audio data packets (e.g., L6, L7, and L8) and second audio data packets (e.g., R6, R7, and R8 packets) among the audio data packets 2510 transmitted from the source electronic device 500. The first electronic device 202 may synchronize and synthesize the normally received audio data packets L6, R6, L7, R7, L8, and R8, and may reproduce (2512) the synthesized audio data packets L/R6, L/R7, and L/R8.

In the fourth interval, the first electronic device 202 may attempt to receive first audio data packets (e.g., L9, L10, and L11 packets) and second audio data packets (e.g., R9, R10, and R11 packets) among the audio data packets 2514 transmitted from the source electronic device 500. The first electronic device 202 may lose some (e.g., L10) of the first audio data packets (e.g., L9, L10, and L11) and some (e.g., R9, and R11) of the second audio data packets (e.g., R9, R10, and R11), and may normally receive the remaining some audio data packets (e.g., L9, L11, and R10). The first electronic device 202 may synchronize and synthesize the L9, R10, and L11 packets normally received, and may reproduce (2516) the synthesized audio data packets L9, R10, and L11.

The first electronic device 202 may treat the data packets (e.g., L12 and R12) lost in both the first audio channel and the second audio channel as not received.

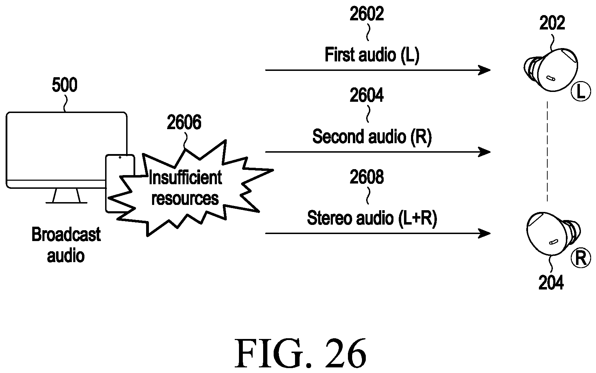

FIG. 26 is a view illustrating stereo transmission of a source electronic device according to an embodiment of the disclosure.

Referring to FIG. 26, the source electronic device 500 may transmit a first audio (e.g., a left audio channel) 2602 and/or a second audio (e.g., a right audio channel) 2604 of the BIS audio service. The first audio 2602 may include audio data packets transmitted at transmission occasions (e.g., sub-events) allocated for the first audio channel. The second audio 2604 may include audio data packets transmitted at transmission occasions (e.g., sub-events) allocated for the second audio channel.

The source electronic device 500 may temporarily use the time interval allocated to the BIS audio service to perform a Bluetooth task (e.g., a Bluetooth concurrency operation) other than the BIS audio service or another communication task (e.g., Wi-Fi coexistence (CoEX)) using the same frequency band as the BIS audio service. While another communication operation having a higher priority than the BIS audio service is performed, transmission of some audio data packets of the BIS audio service may be stopped.

When a situation in which resources (e.g., a time interval) for the BIS audio service are temporarily insufficient (e.g., resource shortage 2606) occurs due to the execution of various wireless communication such as a Bluetooth concurrency operation or a Wi-Fi coexistence operation, the source electronic device 500 may transmit stereo audio stereo audio 2608 obtained by synthesizing the first audio 2602 and the second audio 2604 (e.g., stereo audio data packets including the payload of the first audio 2602 and the payload of the second audio 2604) at their respective transmission occasions instead of transmitting the first audio 2602 and the second audio 2604 through respective transmission occasions. The stereo audio 2608 may be transmitted at least temporarily while the transmission resource of the source electronic device 500 is being used for another communication task.

The sink electronic device (e.g., the first electronic device 202 and/or the second electronic device 204) may receive stereo audio 2608 instead of the first audio 2602 or the second audio 2604, at a reception occasion (e.g., a sub-event) of any one of the first audio 2602 or the second audio 2604. The sink electronic device (e.g., the first electronic device 202 and/or the second electronic device 204) may analyze the audio data packet received from the source electronic device 500 to identify that the audio data packet includes the stereo audio payload (the payload of the first audio 2602 and the payload of the second audio 2604). In an embodiment, the sink electronic device (e.g., the first electronic device 202 and/or the second electronic device 204) may determine whether the audio data packet includes a stereo audio payload, based on the length of the audio data packet or the header field. When the audio data packet includes the stereo audio payload, the sink electronic device (e.g., the first electronic device 202) may synchronize the stereo audio payload and output (e.g., reproduce) the synchronized stereo audio payload to the speaker 354.

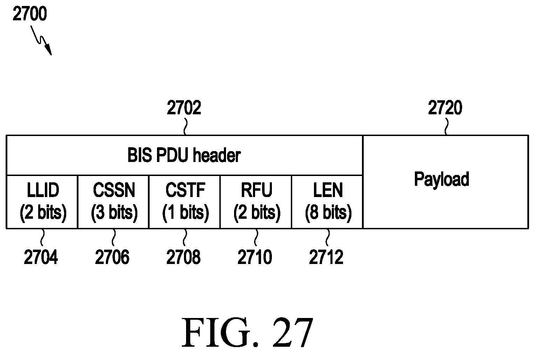

FIG. 27 is a view illustrating a header format of an audio data packet for stereo discrimination according to an embodiment of the disclosure.

Referring to FIG. 27, any one audio data packet 2700 among audio data packets of stereo audio (e.g., the stereo audio 2608) transmitted by the source electronic device 500 may include a header field 2702 (e.g., a BIS PDU header) and a payload field 2720. The header field 2702 may include at least one of a logical link identifier (LLID) field 2704, a control subevent sequence number (CSSN) field 2706, a control subevent transmission flag (CSTF) field 2708, a reserved for future use (RFU) field 2710, or a length (LEN) field 2712.

In an embodiment, the sink electronic device (e.g., the first electronic device 202) may receive the audio data packet 2700, and when the LEN field 2712 included in the header field 2702 of the audio data packet 2700 indicates a payload length exceeding a designated value, the sink electronic device may determine that the audio data packet 2700 includes stereo audio (e.g., the audio payload of the left audio channel and the audio payload of the right audio channel) in the payload field 2720.

In an embodiment, when the sink electronic device (e.g., the first electronic device 202) receives the audio data packet 2700 and identifies that a designated bit (e.g., the first bit) of the RFU field 2710 included in the header field 2702 of the audio data packet 2700 is set to a designated value (e.g., "1"), the sink electronic device may determine that the audio data packet 2700 includes stereo audio in the payload field 2720.

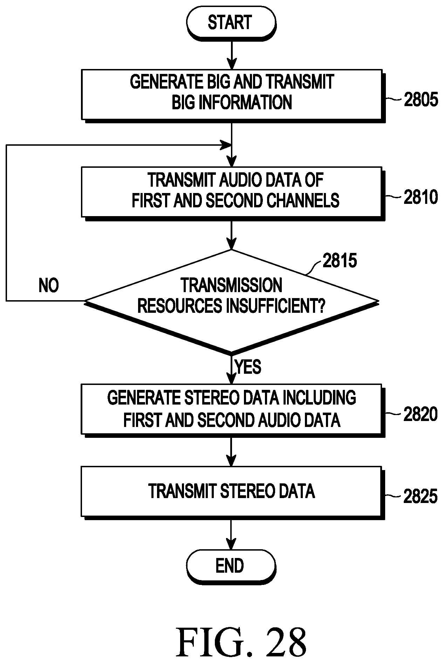

FIG. 28 is a flowchart illustrating stereo transmission of a source electronic device according to an embodiment of the disclosure. In an embodiment, at least one of operations to be described below may be executed by the processor 1210 of the source electronic device 500. According to embodiments, at least one of operations to be described below may be omitted, modified, or ordered differently.

Referring to FIG. 28, in operation 2805, the source electronic device 500 (e.g., the processor 1210) may generate BIG information (e.g., the BIG information 600) including BIG parameters related to the BIS audio service and may include the BIG information 600 in the advertising data (e.g., the AUX_SYNC_IND packet 406) and broadcast the same. In an embodiment, the BIS audio service may include multiple audio channels (e.g., the first audio channel corresponding to left audio and the second audio channel corresponding to right audio), and the BIG information 600 may include BIG parameters (e.g., first BIS parameters) related to the first audio channel and BIG parameters (e.g., second BIS parameters) related to the second audio channel. In an embodiment, the first BIS parameters may indicate a first time interval (e.g., sub-events) for transmitting audio data packets of the first audio channel, and the second BIS parameters may indicate a second time interval (e.g., sub-events) for transmitting audio data packets of the second audio channel.

In operation 2810, the source electronic device 500 may transmit (e.g., broadcast) audio data packets of the first audio channel and audio data packets of the second audio channel according to the BIG information 600.

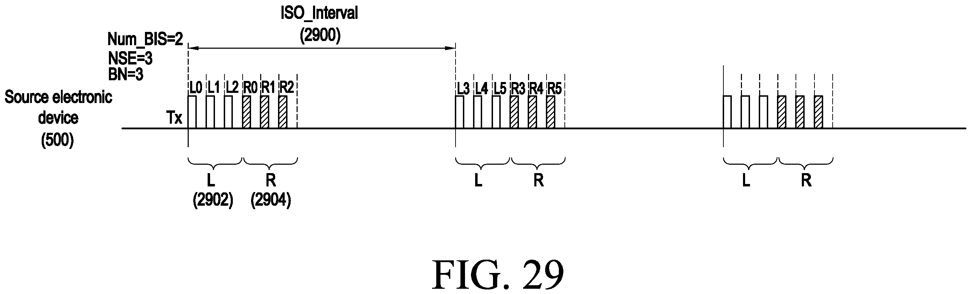

In operation 2815, the source electronic device 500 (e.g., the processor 1210) may determine whether the transmission resources (e.g., the first time interval and the second time interval) of the BIS audio service are insufficient to transmit the audio data packets of the first audio channel and the audio data channels of the second audio channel. In an embodiment, before each interval starts, the source electronic device 500 (e.g., the processor 1210) may determine whether at least a portion of the first time interval (e.g., the first time interval 2902 of FIG. 29) and the second time interval (e.g., the second time interval 2904 of FIG. 29) in the current interval is used for a communication task (e.g., a BT concurrency operation using the same frequency band as the BIS audio service and/or a Wi-Fi coexistence operation) other than the BIS audio service. For example, when another communication task is scheduled and the priority of the other communication task is higher than the priority of the BIS audio service, the source electronic device 500 (e.g., the processor 1210) may allocate at least a portion of the first time interval or the second time interval to the other communication task, thereby determining that the transmission resources of the BIS audio service are insufficient in the current interval.

When it is determined that the transmission resources of the BIS audio service are insufficient, the source electronic device 500 (e.g., the processor 1210) may proceed to operation 2820. When it is not determined that the transmission resources of the BIS audio service are insufficient, the source electronic device 500 (e.g., the processor 1210) may return to operation 2810.

In operation 2820, the source electronic device 500 (e.g., the processor 1210) may generate stereo audio data (e.g., stereo audio data packets including the audio data packet 2700 of FIG. 27) including first audio data (e.g., the payload of the first audio 2602) for the first audio channel and second audio data (e.g., the payload of the second audio 2604) for the second audio channel.

In operation 2825, the source electronic device 500 (e.g., the processor 1210) may transmit (e.g., broadcast) the stereo audio data at at least one transmission occasion (e.g., a sub-event) of the current interval. The stereo audio data packet transmitted by the source electronic device 500 (e.g., the processor 1210) in one sub-event may include an audio payload from a mono audio data packet having the same sequence number.

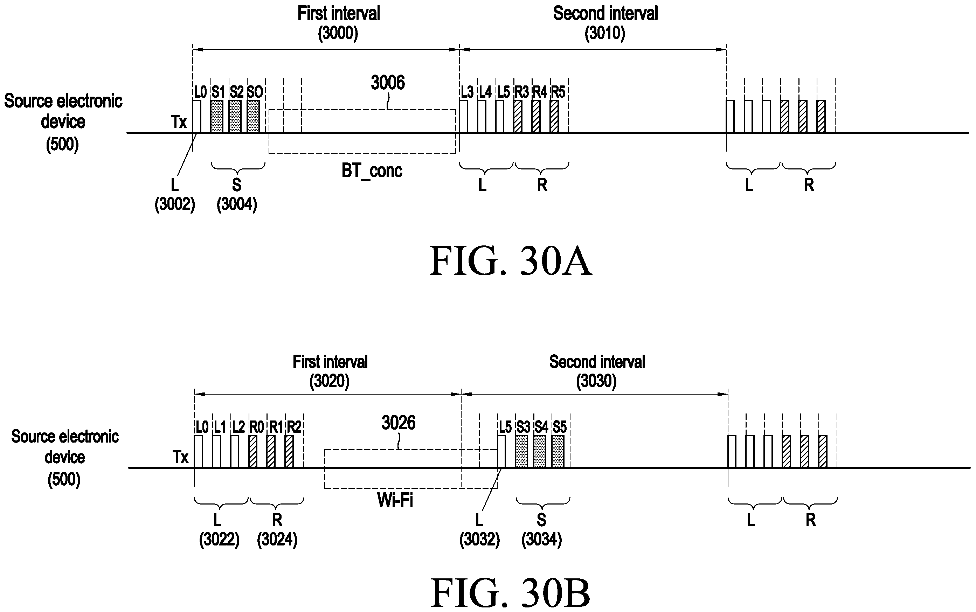

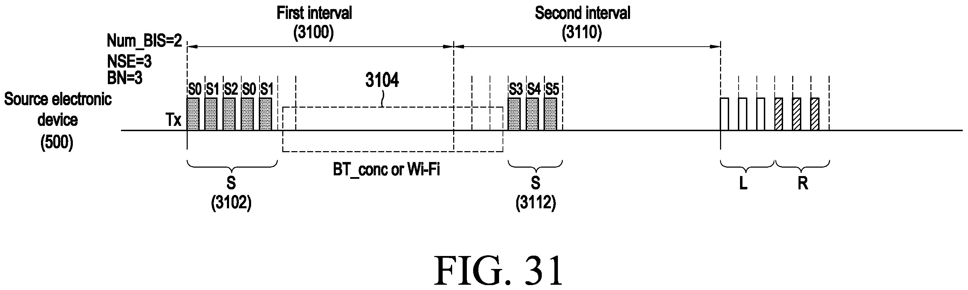

In an embodiment, the source electronic device 500 (e.g., the processor 1210) may include, in stereo audio data packets, only audio payloads of some audio data packets that may not be transmitted due to another communication task within one interval, and may transmit the same (e.g., see FIGS. 30A and 30B). In an embodiment, the source electronic device 500 (e.g., the processor 1210) may include audio payloads of all audio data packets in stereo audio data packets and transmit the same in one or more interval in which another communication task is scheduled (see FIG. 31).

FIG. 29 is a timing diagram illustrating stereo transmission of a source electronic device according to an embodiment of the disclosure.

Referring to FIG. 29, the source electronic device 500 may provide a BIS audio service defined as BIS_Num=2, NSE=3, and BN=3. Each interval (e.g., ISO_Interval 2900) may include a first time interval 2902 for a first audio channel (e.g., a left audio channel) and a second time interval 2904 for a second audio channel (e.g., a right audio channel). The first time interval 2902 may include three transmission occasions allocated for the first audio channel (e.g., the left audio channel), and the second time interval 2904 may include three transmission occasions allocated for the second audio channel (e.g., the right audio channel).

The source electronic device 500 may transmit each of three first audio data packets (e.g., L0, L1, and L2 packets) including left audio data at three transmission occasions within the first time interval 2902, and may transmit each of three second audio data packets (e.g., R0, R1, and R2 packets) including right audio data at three transmission occasions within the second time interval 2904. While the transmission resources of the BIS audio service are not insufficient, the source electronic device 500 may use all transmission occasions of the first time interval 2902 and the second time interval 2904 for the BIS audio service.

FIGS. 30A and 30B are views illustrating examples of an operation for transmitting stereo audio data packets in a situation where transmission resources are insufficient according to an embodiment of the disclosure. Here, the source electronic apparatus 500 may be configured to provide the BIS audio service as shown in FIG. 29 defined as BIS_Num=2, NSE=3, and BN=3.

Referring to FIG. 30A, before the current interval (e.g., the first interval 3000) starts, the source electronic device 500 may identify that a communication task (e.g., a Bluetooth concurrency (BT_conc) operation) other than the BIS audio service is scheduled for the first interval 3000 and that the Bluetooth concurrency (BT_conc) operation has a higher priority than the BIS audio service. The time interval 3006 required (i.e., scheduled) for the Bluetooth concurrency BT_conc operation may occupy a portion (e.g., the last two transmission occasions) of the time interval (e.g., six transmission occasions corresponding to the first time interval 2902 and the second time interval 2904) allocated for the BIS audio service and the remaining portion of the first interval 300, and thus the source electronic device 500 may determine that the last two audio data packets (e.g., R1 and R2 packets) among the audio data packets (e.g., L0, L1, L2, R0, R1, and R2 packets) of the first interval 3000 are not to be transmitted.

According to the above determination, the source electronic device 500 may transmit the audio data packet (e.g., the L0 packet) of the first audio channel at the first transmission occasion 3002 of the first interval 3000, and may transmit stereo audio data packets (e.g., S1, S2, and S0 packets) including the first audio and the second audio at the remaining three available transmission occasions 3004. Here, the S0 packet is a stereo audio data packet including audio payloads of the R0 packet and the L0 packet, the S1 packet is a stereo audio data packet including audio payloads of the R1 packet and the L1 packet, and the S2 packet is a stereo audio data packet including audio payloads of the R2 packet and the L2 packet.

The source electronic device 500 may transmit the S1 packet including the audio payloads of the L1 packet and the R1 packet, instead of the L1 packet, at the second transmission occasion. The source electronic device 500 may transmit the S2 packet including the audio payloads of the L2 packet and the R2 packet, instead of the L2 packet, at the third transmission occasion. The source electronic device 500 may transmit the S0 packet including the audio payloads of the L0 packet and the R0 packet, instead of the R0 packet, at the fourth transmission occasion.

After the Bluetooth concurrency operation is completed in the time interval 3006, the source electronic device 500 may normally transmit the first audio data packets (e.g., L3, L4, and L5 packets) and the second audio data packets (e.g., R3, R4, and R5 packets) of the BIS audio service again in the next interval (e.g., the second interval 3010).

Referring to FIG. 30B, before the current interval (e.g., the first interval 3020) starts, the source electronic device 500 may identify that a communication task (e.g., a Wi-Fi coexistence operation or another Bluetooth communication (i.e., BT_conc)) other than the BIS audio service is scheduled for the first interval 3020, and the other communication task has a higher priority than the BIS audio service. The time interval 3026 required (i.e., scheduled) for the other communication operation starts after the time interval (e.g., the first time interval 3022 and the second time interval 3024) allocated for the BIS audio service in the first interval 3020, but may occupy a portion (e.g., the first two transmission occasions) of the next interval (e.g., the second interval 3030), and the source electronic device 500 may thus determine that the first two audio data packets (e.g., L3 and L4 packets) among the audio data packets (e.g., L3, L4, L5, R3, R4, and R5 packets) of the second interval 3030 are not to be transmitted.

According to the above determination, after performing the Wi-Fi coexistence operation during the time interval 3026, the source electronic device 500 may transmit the audio data packet (e.g., the L5 packet) of the first audio channel at the third transmission occasion 3032 of the second interval 3000, and may transmit stereo audio data packets (e.g., S3, S4, and S5 packets) including the first audio and the second audio at the next three transmission occasions 3034.

After the second interval 3030, the source electronic device 500 may normally transmit the first audio data packets (e.g., L6, L7, and L8 packets) and the second audio data packets (e.g., R6, R7, and R8 packets) of the BIS audio service again.

FIG. 31 is a view illustrating an operation for transmitting stereo audio data packets on all occasions in a situation where transmission resources are insufficient according to an embodiment of the disclosure. Here, the source electronic apparatus 500 may provide the BIS audio service as shown in FIG. 29 defined as BIS _Num=2, NSE=3, and BN=3.

Referring to FIG. 31, before the current interval (e.g., the first interval 3100) starts, the source electronic device 500 may identify that a communication task (e.g., a BT_conc operation or Wi-Fi coexistence operation) other than the BIS audio service is scheduled for the first interval 3100, and the other communication task has a higher priority than the BIS audio service. The time interval 3104 required (i.e., scheduled) for the other communication operation may start at the last transmission occasion among the six transmission occasions of the time interval (e.g., the time interval 3102) allocated for the BIS audio service in the first interval 3100, and may occupy a portion (e.g., the first three transmission occasions) of the next interval (e.g., the second interval 3110) and the source electronic device 500 may thus determine that the last one audio data packet (e.g., R2 packet) of the second audio channel are not to be transmitted in the first interval 3100 and the first three audio data packets (e.g., L3, L4, and L5 packets) of the first audio channel are not to be transmitted in the second interval 3110.

According to the above determination, the source electronic device 500 may transmit stereo audio data packets (e.g., S0, S1, S2, S0, and S1 packets) including the first audio and the second audio at the first five transmission occasions 3102 of the first interval 3100, and may transmit stereo audio data packets (e.g., S3, S4, and S5 packets) including the first audio and the second audio at the last three transmission occasions 3112 of the second interval 3110.

After the second interval 3110, the source electronic device 500 may normally transmit the first audio data packets (e.g., L6, L7, and L8 packets) and the second audio data packets (e.g., R6, R7, and R8 packets) of the BIS audio service again.

When packet reception fails, the sink electronic device (e.g., the first electronic device 202 and/or the second electronic device 204) may receive an audio data packet of another audio channel. The sink electronic device (e.g., the first electronic device 202 and/or the second electronic device 204) may determine whether the received data packet includes stereo audio data, based on the payload size or header field of the received audio data packet. The sink electronic device (e.g., the first electronic device 202 and/or the second electronic device 204) may output (e.g., reproduce mono audio) audio data of a designated single audio channel obtained from the received stereo audio data packet, or may output (e.g., reproduce stereo audio) audio data of designated multiple audio channels obtained from the received stereo audio data packet. In an embodiment, the sink electronic device (e.g., the first electronic device 202) may reproduce mono audio or stereo audio based on the received stereo audio data packet depending on whether another sink electronic device (e.g., the second electronic device 204) receiving the same BIS audio service is operating normally.

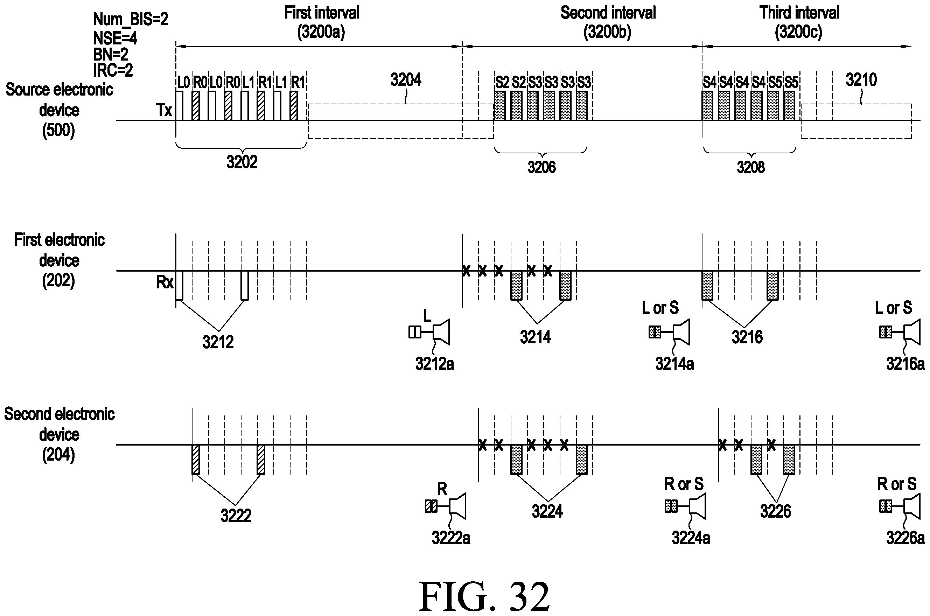

FIG. 32 is a view illustrating an operation for transmitting audio data packets arranged in an interleave manner in a situation where transmission resources are insufficient according to an embodiment of the disclosure. Here, the source electronic apparatus 500 may be configured to provide a BIS audio service defined as BIS_Num=2, NSE=4, BN=2, and IRC=2.

Referring to FIG. 32, the source electronic device 500 may configure the BIS audio service to alternately transmit four first audio data packets (e.g., L0, L0, L1, and L1 packets) corresponding to the first audio channel and four second audio data packets (e.g., R0, R0, R1, and R1 packets) corresponding to the second audio channel at eight transmission occasions in a time interval (e.g., the time interval 3202) allocated for the BIS audio service in each interval (e.g., the first interval 3200a). The first electronic device 202 and the second electronic device 204 may monitor reception occasions allocated to their own audio channels among the eight reception occasions corresponding to the eight transmission occasions in each interval.

The first electronic device 202 may receive one or more first audio data packets 3212 (e.g., L0 and L1 packets) in the time interval 3202, and may output (3212a) (e.g., reproduce as mono audio) the L0 and L1 packets to the speaker 354. The second electronic device 204 may operate according to an anchor point starting with reference to a first second audio data packet (e.g., R0 packet) in each interval. The second electronic device 204 may receive one or more first audio data packets 3222 (e.g., R0 and R1 packets) in the time interval 3202, and may output (3222a) (e.g., reproduce as mono audio) the R0 and R1 packets to the speaker 354.

The source electronic device 500 may identify that a communication task (e.g., BT_conc operation or Wi-Fi coexistence operation) other than the BIS audio service is scheduled over the first interval 3200a and the second interval 3200b, and the other communication task has a higher priority than the BIS audio service. The time interval 3204 required (i.e., scheduled) for the other communication operation may start after the time interval 3202 in the first interval 3200a and may occupy a portion (e.g., the first two transmission occasions) of the next interval (e.g., the second interval 3200b), and the source electronic device 500 may determine that the first two audio data packets (e.g., L2 and R2 packets) of the second interval 3200b are not to be transmitted.

According to the above determination, the source electronic device 500 may transmit stereo audio data packets (e.g., S2, S2, S3, S3, S3, and S3 packets) including the first audio and the second audio at the remaining six available transmission occasions 3206 of the second interval 3200b. During stereo transmission, the source electronic device 500 may repeatedly transmit stereo audio data packets having the same sequence number.

The first electronic device 202 may receive audio data packets 3214 at a fourth reception occasion and a seventh reception occasion among eight transmission occasions corresponding to transmission occasions of the source electronic device 500 in the second interval 3200b. The first electronic device 202 may identify that the received audio data packets 3214 are stereo audio data packets (e.g., S2 and S3 packets), based on a designated bit in the LEN field 2712 or the RFU field 2710 of the received audio data packets 3214. In an embodiment, the first electronic device 202 may output (3214a) (e.g., reproduce as mono audio) audio payloads of the first audio channel obtained from the stereo audio data packets 3214 to the speaker 354.

In an embodiment, the first electronic device 202 may output (3214a) audio payloads of the first audio channel and the second audio channel, which are obtained from the stereo audio data packets 3214, to the speaker 354 (e.g., reproduce stereo audio). In an embodiment, if it is determined that the second electronic device 204 is not operating normally, e.g., based on at least one of operation 1610, operation 1615, operation 1620, operation 1625, or operation 1630 of FIG. 16, the first electronic device 202 may output (3214a) (e.g., reproduce as stereo audio) audio payloads of the first audio channel and the second audio channel to the speaker 354.

The second electronic device 204 may receive audio data packets 3224 at a third reception occasion and a seventh reception occasion among eight transmission occasions corresponding to transmission occasions of the source electronic device 500 in the second interval 3200b. The second electronic device 204 may identify that the received audio data packets 3224 are stereo audio data packets (e.g., S2 and S3 packets), based on a designated bit in the LEN field 2712 or the RFU field 2710 of the received audio data packets 3224. In an embodiment, the second electronic device 204 may output (3224a) (e.g., reproduce as mono audio) audio payloads of the second audio channel obtained from the stereo audio data packets 3224 to the speaker 354.

In an embodiment, the second electronic device 204 may output (3224a) audio payloads of the first audio channel and the second audio channel, which are obtained from the stereo audio data packets 3224, to the speaker 354 (e.g., reproduce stereo audio). In an embodiment, if it is determined that the first electronic device 202 is not operating normally, e.g., based on at least one of operation 1610, operation 1615, operation 1620, operation 1625, or operation 1630 of FIG. 16, the second electronic device 204 may output (3224a) (e.g., reproduce as stereo audio) audio payloads of the first audio channel and the second audio channel to the speaker 354.

The source electronic device 500 may identify that a communication task (e.g., BT_conc operation or Wi-Fi coexistence operation) other than the BIS audio service is scheduled in the third interval 3200c, and the other communication task has a higher priority than the BIS audio service. The time interval 3210 required (i.e., scheduled) for the other communication operation may occupy a portion (e.g., the last two transmission occasions) of the time interval allocated for the BIS audio service and the remaining portion of the third interval 3200c within the third interval 3200c, and the source electronic device 500 may determine that the last two audio data packets (e.g., L5 and R5 packets) of the third interval 3200c are not to be transmitted.

According to the above determination, the source electronic device 500 may transmit stereo audio data packets (e.g., S4, S4, S4, S4, S5, and S5 packets) including the first audio and the second audio at the first six available transmission occasions 3208 of the third interval 3000c.

The first electronic device 202 may receive the audio data packets 3216 at the first reception occasion and the fifth reception occasion among the eight transmission occasions corresponding to the transmission occasions of the source electronic device 500 in the third interval 3200c. The first electronic device 202 may identify that the received audio data packets 3216 are stereo audio data packets (e.g., S4 and S5 packets), based on a designated bit in the LEN field 2712 or the RFU field 2710 of the received audio data packets 3216. In an embodiment, the first electronic device 202 may output (3216a) (e.g., reproduce as mono audio) audio payloads of the first audio channel obtained from the stereo audio data packets 3216 to the speaker 354.

**In** an embodiment, the first electronic device 202 may output (3216a) audio payloads of the first audio channel and the second audio channel, which are obtained from the stereo audio data packets 3216, to the speaker 354 (e.g., reproduce stereo audio). In an embodiment, if it is determined that the second electronic device 204 is not operating normally, e.g., based on at least one of operation 1610, operation 1615, operation 1620, operation 1625, or operation 1630 of FIG. 16, the first electronic device 202 may output (3216a) (e.g., reproduce as stereo audio) audio payloads of the first audio channel and the second audio channel to the speaker 354.

The second electronic device 204 may receive the audio data packets 3226 at the third reception occasion and the fifth reception occasion among the eight transmission occasions corresponding to the transmission occasions of the source electronic device 500 in the third interval 3200c. The first electronic device 202 may identify that the received audio data packets 3226 are stereo audio data packets (e.g., S4 and S5 packets), based on a designated bit in the LEN field 2712 or the RFU field 2710 of the received audio data packets 3226. In an embodiment, the second electronic device 204 may output (3226a) (e.g., reproduce as mono audio) audio payloads of the second audio channel obtained from the stereo audio data packets 3226 to the speaker 354.

In an embodiment, the second electronic device 204 may output (3226a) audio payloads of the first audio channel and the second audio channel, which are obtained from the stereo audio data packets 3226, to the speaker 354 (e.g., reproduce stereo audio). In an embodiment, if it is determined that the first electronic device 202 is not operating normally, e.g., based on at least one of operation 1610, operation 1615, operation 1620, operation 1625, or operation 1630 of FIG. 16, the second electronic device 204 may output (3226a) (e.g., reproduce as stereo audio) audio payloads of the first audio channel and the second audio channel to the speaker 354.

Embodiments of the disclosure may output multiple audio channels (e.g., stereo audio reproduction) by one sink electronic device according to the user environment and sync context, thereby enhancing the user's satisfaction for audio reception.

A first electronic device 202 according to an embodiment may include memory 390 storing instructions, a communication circuit 320 and at least one processor functionally coupled with the memory and the communication circuit. The instructions, when executed by the at least one processor, may cause the first electronic device to receive, through the communication circuit, advertising data including information related to a broadcast stream including a first audio channel and a second audio channel. The instructions, when executed by the at least one processor, may cause the first electronic device to receive first audio data of the first audio channel from a source electronic device 500 through the communication circuit based on the information. The instructions, when executed by the at least one processor, may cause the first electronic device to determine whether to receive second audio data of the second audio channel based on state information about a second electronic device 204 related to the second audio channel. The instructions, when executed by the at least one processor, may cause the first electronic device to receive the second audio data of the second audio channel from the source electronic device through the communication circuit based on determining to receive the second audio data of the second audio channel. The instructions, when executed by the at least one processor, may cause the first electronic device to output a reproduction audio corresponding to the first audio data and the second audio data. This way, the first electronic device can compensate for failures regarding the second electronic device which prevent the second electronic device from receiving second audio data of the second audio channel and/or outputting reproduction audio corresponding to the second audio data of the second audio channel.

In an embodiment, the state information may include at least one of information indicating that the second electronic device is not worn, information indicating that the second electronic device is stored in a case, or information indicating a low battery level of the second electronic device. This way, it is possible to adapt the first electronic device's behavior according to the above-described specific state information.

In an embodiment, the instructions may cause the first electronic device to receive the state information from the second electronic device or an external electronic device 101. Hence, the first electronic device can either receive the state information from the second electronic device or an external electronic device, which might, in particular, be useful in cases, where the second electronic device is in a state not able to communicate. Additionally, the first electronic device may be configured to receive the state information from the second electronic device and/or an external electronic device.

In an embodiment, the state information may include information indicating communication disconnection between the first electronic device and the second electronic device. This way, a missing connection between first and second electronic device can be detected.

In an embodiment, the instructions may cause the first electronic device to determine to receive the second audio data of the second audio channel, based on a stereo reproduction command to instruct stereo reproduction. In this way, due to stereo reproduction, the second audio data of the second audio channel can be reproduced and the second audio data is hence not lost.

In an embodiment, the instructions may cause the first electronic device to receive the stereo reproduction command from an external electronic device 101 or through an input device 330 from a user. This way, the stereo reproduction can be controlled in an easy manner externally.

In an embodiment, the instructions may cause the first electronic device to determine to receive the second audio data of the second audio channel, based on identifying that at least one first audio data packet of the first audio data is not received. This way the capacity of the at least one processor of the first electronic device can be utilized even though at least tone of the first audio data is not transmitted to and/or received.

In an embodiment, the instructions may cause the first electronic device to receive a second audio data packet having a sequence number corresponding to the non-received first audio data packet of the second audio data. In this way, the second audio data packet can be specifically selected depending on the non-received first audio data packet.

In an embodiment, the instructions may cause the first electronic device to receive an audio data packet from the source electronic device through the communication circuit, identify whether the audio data packet includes stereo audio data including a first audio payload of the first audio channel and a second audio payload of the second audio channel based on a designated bit within a header field or a payload length of the audio data packet, and reproduce the stereo audio data, based on identifying that the audio data packet includes the stereo audio data. This way, it can easily be determined if stereo audio data is included in the audio data packet.

In an embodiment, the instructions may cause the first electronic device to identify that the audio data packet includes the stereo audio data, determine whether to reproduce the stereo audio data or reproduce the first audio payload based on state information about the second electronic device, and reproduce the stereo audio data or the first audio payload according to a result of the determination. This way the state information can be beneficially used to decide which audio data to reproduce. In particular, not transmitted and/or received audio data can preferably targeted be substituted.

A method performed by a first electronic device 202 according to an embodiment may comprise receiving (1510)advertising data including information related to a broadcast stream including a first audio channel and a second audio channel. The method may comprise receiving (1515)first audio data of the first audio channel from a source electronic device 500 based on the parameters. The method may comprise determining (1520) whether to receive second audio data of the second audio channel based on state information about a second electronic device (204)related to the second audio channel. The method may comprise receiving (1525)the second audio data of the second audio channel from the source electronic device based on determining to receive the second audio data of the second audio channel. The method may comprise outputting (1530) a reproduction audio corresponding to the first audio data and the second audio data. Generally, the advantages and technical effects described above for the first electronic device and different embodiments thereof also apply to the corresponding method for operating the first electronic device and the embodiments of the method.

In an embodiment, the state information may include at least one of information indicating that the second electronic device is not worn, information indicating that the second electronic device is stored in a case, or information indicating a low battery level of the second electronic device.

In an embodiment, the method may further comprise receiving (1605) the state information from the second electronic device or an external electronic device (101).

In an embodiment, the state information may include information indicating communication disconnection between the first electronic device and the second electronic device.

In an embodiment, the method may further comprise determining to receive the second audio data of the second audio channel, based on a stereo reproduction command to instruct stereo reproduction (1630).

In an embodiment, the stereo reproduction command may be received from an external electronic device (101) or may be received form a user through an input device of the first electronic device.

In an embodiment, the method may further comprise determining (1640) to receive the second audio data of the second audio channel, based on identifying that at least one first audio data packet of the first audio data is not received (1635).

In an embodiment, receiving the second audio data may further include receiving a second audio data packet having a sequence number corresponding to the non-received first audio data packet of the second audio data.

In an embodiment, the method may further comprise receiving an audio data packet from the source electronic device, identifying whether the audio data packet includes stereo audio data including a first audio payload of the first audio channel and a second audio payload of the second audio channel based on a designated bit within a header field or a payload length of the audio data packet, and reproducing the stereo audio data, based on identifying that the audio data packet includes the stereo audio data.

In an embodiment, the method may further comprise determining whether to reproduce the stereo audio data or reproduce the first audio payload based on state information about the second electronic device.

According to an embodiment, in a non-transitory computer-readable storage medium storing one or more programs, the one or more programs stores instructions to, when executed by at least one processor of an electronic device, in particular the afore-mentioned electronic device, enable the electronic device to receive advertising data including information related to a broadcast stream including a first audio channel and a second audio channel, receive, through a communication circuit, in particular the communication circuit of the electronic device, first audio data of the first audio channel from a source electronic device (500) based on the information, determine whether to receive second audio data of the second audio channel based on state information about a second electronic device (204) related to the second audio channel, receive the second audio data of the second audio channel from the source electronic device through the communication circuit based on determining to receive the second audio data of the second audio channel, and output reproduction audio corresponding to the first audio data and the second audio data. Generally, the advantages and technical effects described above for the first electronic device and different embodiments thereof as well as for the method for operating a first electronic device also apply to the above-described non-transitory computer-readable storage.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., the memory 390, internal memory 136 or external memory 138) that is readable by a machine (e.g., the electronic device 202 or 204 or the electronic device 101). For example, a processor (e.g., the processor 310 or processor 120) of the machine (e.g., the electronic device 202 or 204 or electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A first electronic device (202) comprising:
memory (390) storing instructions;
a communication circuit (320); and
at least one processor (310) functionally coupled with the memory (390) and the communication circuit (320), wherein the instructions, when executed by the at least one processor (310), cause the first electronic device (202) to:
receive, through the communication circuit (320), advertising data (1702, 1712, 1802, 1902, 2002, 2014) including information related to a broadcast stream including a first audio channel and a second audio channel;
receive first audio data (1406, 1706, 1806, 1906, 2006) of the first audio channel from a source electronic device (500) through the communication circuit based on the information;
determine whether to receive second audio data (1408, 1708, 1808, 1908, 2008) of the second audio channel based on state information (1710, 1810, 1910, 2010) about a second electronic device (204) related to the second audio channel;
receive the second audio data (1408, 1708, 1808, 1908, 2008) of the second audio channel from the source electronic device (500) through the communication circuit (320) based on determining to receive the second audio data (1408, 1708, 1808, 1908, 2008) of the second audio channel; and
output a reproduction audio corresponding to the first audio data (1406, 1706, 1806, 1906, 2006) and the second audio data (1408, 1708, 1808, 1908, 2008).

2. The first electronic device (202) of claim 1, wherein the state information (1710, 1810, 1910, 2010) includes at least one of:
information indicating that the second electronic device (204) is not worn;
information indicating that the second electronic device (204) is stored in a case; or
information indicating a low battery level of the second electronic device (204).

3. The first electronic device (202) of claim 1 or 2, wherein the instructions cause the first electronic device (202) to
receive the state information (1710, 1810, 1910, 2010) from the second electronic device (204) or an external electronic device (101).

4. The first electronic device (202) of any one of claims 1 to 3, wherein the state information (1710, 1810, 1910, 2010) includes
information indicating communication disconnection between the first electronic device (202) and the second electronic device (204).

5. The first electronic device (202) of any one of claims 1 to 4, wherein the instructions cause the first electronic device (202) d to
determine to receive the second audio data (1408, 1708, 1808, 1908, 2008) of the second audio channel, based on a stereo reproduction command (2012) to instruct stereo reproduction.

6. The first electronic device (202) of claim 5, wherein the instructions cause the first electronic device (202) d to
receive the stereo reproduction command (2012) from an external electronic device (101) or through an input device (330) from a user.

7. The first electronic device (202) of any one of claims 1 to 6, wherein the instructions cause the first electronic device (202) to
determine to receive the second audio data (1408, 1708, 1808, 1908, 2008) of the second audio channel, based on identifying that at least one first audio data packet of the first audio data (1406, 1706, 1806, 1906, 2006) is missed.

8. The first electronic device (202) of claim 7, wherein the instructions cause the first electronic device (202) to
receive a second audio data packet having a sequence number corresponding to the non-received first audio data packet from among the second audio data (1408, 1708, 1808, 1908, 2008).

9. The first electronic device (202) of any one of claims 1 to 8, wherein the instructions cause the first electronic device (202) to:
receive an audio data packet from the source electronic device (500) through the communication circuit (320);
identify whether the audio data packet includes stereo audio data including a first audio payload of the first audio channel and a second audio payload of the second audio channel based on a designated bit within a header field or a payload length of the audio data packet; and
reproduce the stereo audio data, based on identifying that the audio data packet includes the stereo audio data.

10. The first electronic device (202) of claim 9, wherein the instructions cause the first electronic device (202) to:
identify that the audio data packet includes the stereo audio data;
determine whether to reproduce the stereo audio data or reproduce the first audio payload based on state information (1710, 1810, 1910, 2010) about the second electronic device (204); and
reproduce the stereo audio data or the first audio payload according to a result of the determination.

11. A method performed by a first electronic device (202), the method comprising:
receiving (1510) advertising data (1702, 1712, 1802, 1902, 2002, 2014) including information related to a broadcast stream including a first audio channel and a second audio channel;
receiving (1515) first audio data (1406, 1706, 1806, 1906, 2006) of the first audio channel from a source electronic device (500) based on the information;
determining (1520) whether to receive second audio data (1408, 1708, 1808, 1908, 2008) of the second audio channel based on state information (1710, 1810, 1910, 2010) about a second electronic device (204) related to the second audio channel;
receiving (1525) the second audio data (1408, 1708, 1808, 1908, 2008) of the second audio channel from the source electronic device (500) based on determining to receive the second audio data (1408, 1708, 1808, 1908, 2008) of the second audio channel; and
outputting (1530) reproduction audio corresponding to the first audio data (1406, 1706, 1806, 1906, 2006) and the second audio data (1408, 1708, 1808, 1908, 2008).

12. The method of claim 11, further comprising
determining to receive the second audio data (1408, 1708, 1808, 1908, 2008) of the second audio channel, based on a stereo reproduction command (2012) to instruct stereo reproduction (1630),wherein the stereo reproduction command
is received from an external electronic device (101) or is received form a user through an input device (330) of the first electronic device.

13. The method of claim 11 or 12, further comprising
determining (1640) to receive the second audio data (1408, 1708, 1808, 1908, 2008) of the second audio channel, based on identifying that at least one first audio data packet of the first audio data (1406, 1706, 1806, 1906, 2006) is missed (1635),
wherein receiving the second audio data further includes
receiving a second audio data packet having a sequence number corresponding to the non-received first audio data packet from among the second audio data (1408, 1708, 1808, 1908, 2008).

14. The method of any one of claims 11 to 13, further comprising:
receiving an audio data packet from the source electronic device (500);
identifying whether the audio data packet includes stereo audio data including a first audio payload of the first audio channel and a second audio payload of the second audio channel based on a designated bit within a header field (2702) or a payload length of the audio data packet; and
reproducing the stereo audio data, based on identifying that the audio data packet includes the stereo audio data.

15. A non-transitory computer-readable storage medium storing one or more programs, wherein the one or more programs stores instructions to, when executed by at least one processor (310) of an electronic device (202),
enable the electronic device (202) to receive advertising data (1702, 1712, 1802, 1902, 2002, 2014) including information related to a broadcast stream including a first audio channel and a second audio channel,
receive first audio data (1406, 1706, 1806, 1906, 2006) of the first audio channel from a source electronic device (500) based on the information,
determine whether to receive second audio data (1408, 1708, 1808, 1908, 2008) of the second audio channel based on state information (1710, 1810, 1910, 2010) about a second electronic device (204) related to the second audio channel,
receive the second audio data (1408, 1708, 1808, 1908, 2008) of the second audio channel from the source electronic device (500) based on determining to receive the second audio data (1408, 1708, 1808, 1908, 2008) of the second audio channel, and
output reproduction audio corresponding to the first audio data (1406, 1706, 1806, 1906, 2006) and the second audio data (1408, 1708, 1808, 1908, 2008).
